# EUROPÄISCHE PATENTANMELDUNG

(11) **EP 4 549 514 A1**
(43) Veröffentlichungstag der Anmeldung: **07.05.2025**
(21) Anmeldenummer: 23207298.3
(22) Anmeldetag: 01.11.2023
(51) Int. Cl.: C08L 83/04, C09J 183/04

(54) **FEUCHTIGKEITSHÄRTENDE RTV-SILIKONZUSAMMENSETZUNG MIT HOHER WEITERREISSFESTIGKEIT UND LAGERSTABILITÄT**

(71) Anmelder: Sika Technology AG, 6340 Baar (CH)
(72) Erfinder: SUTER, Riccardo, 5400 Baden (CH); MERENNA, Guilhem, 8006 Zürich (CH)
(74) Vertreter: Sika Patent Attorneys

(57) **Zusammenfassung**

Beschrieben wird eine feuchtigkeitshärtende Silikonzusammensetzung, umfassend mindestens ein vernetzbares Polydiorganylsiloxan mit Alkoxysilan-Endgruppen, mindestens einen Kondensationskatalysator, mindestens einen Vernetzer mit Alkoxysilangruppen, mindestens eine gemahlene Kreide, welche mindestens den Hauptanteil aller enthaltenen Füllstoffe ausmacht, optional weitere Inhaltsstoffe, dadurch gekennzeichnet, dass die gemahlene Kreide eine Partikelgrösse d50, bestimmt nach der Norm ISO 13320:2009, von mehr als 0.6 µm und weniger als 2 µm aufweist.

Die Zusammensetzung ist besonders als niedermoduliger Dichtstoff geeignet und weist dabei eine ausgezeichnete Weiterreissfestigkeit und eine ausgezeichnete Lagerstabilität auf, insbesondere auch in Form einer RTV-1 Formulierung.

## Beschreibung

### Technisches Gebiet

Die Erfindung betrifft feuchtigkeitshärtende, kondensationsvernetzende Silikonzusammensetzungen, deren Verwendung als elastische Kleb- und Dichtstoffe, sowie Verfahren zum Verfugen und Verkleben von Substraten.

### Stand der Technik

Silikone sind bekannte Zusammensetzungen, welche schon lange als Kleb- oder Dichtstoffe eingesetzt werden. Solche Silikone können als ein- oder zweikomponentige Silikonzusammensetzungen gestaltet werden und enthalten als Hauptkomponenten üblicherweise ein vernetzbares Polydiorganylsiloxan, einen Vernetzer und einen Katalysator. Es wird zwischen kaltvernetzenden RTV-Silikonen (RTV = raumtemperaturvernetzend bzw. -vulkanisierend) und warmvernetzenden HTV-Silikonen (HTV = hochtemperaturvernetzend bzw. - vulkanisierend) unterschieden. Ein- und zweikomponentige RTV-Silikone werden auch als RTV-1 Silikone bzw. RTV-2 Silikone bezeichnet.

Feuchtigkeitshärtende, kondensationsvernetzende RTV Silikone sind lange bekannt. Ebenfalls bekannt ist, dass solche Zusammensetzungen auf Basis sogenannter neutraler Vernetzung aushärten können. Klassischerweise setzten neutral vernetzende RTV-1 Silikone Oximverbindungen frei, deren Geruch als sehr unangenehm empfunden wird und die aus Gründen des Gesundheitsschutzes weniger bevorzugt sind und zunehmend gesetzlich eingeschränkt werden. Alternativ zu Oxim-freisetzenden Zusammensetzungen können neutral vernetzende RTV-1 Silikone auch mit Alkoxysilangruppen-haltigen Polydiorganylsiloxanen formuliert werden. Spaltprodukte der Vernetzung sind dann lediglich Alkohole, welche aus den Alkoxysilangruppen abgespalten werden, meist Methanol oder Ethanol, deren Geruch und toxikologisches Profil deutlich weniger problematisch sind als mit Oximen.

Die in feuchtigkeitshärtenden, kondensationsvernetzenden Silikonen eingesetzten Polydiorganylsiloxane können mit Hydroxyl-Gruppen terminiert sein. Allerdings hat sich gezeigt, dass diese Art Endgruppe die erreichbaren Eigenschaften einschränkt und zu grösseren Problemen beim Compoundier-Prozess führt, speziell im Fall von RTV-1 Silikonen. Alternativ können die Polydiorganylsiloxane mit Alkyldialkoxysilyl- oder Trialkoxysilyl-Endgruppen modifiziert sein. Solche modifizierten Polymere sind lange bekannt. Ihre Herstellung mittels Kondensationsreaktion wird beispielsweise beschrieben in EP763557 oder EP0559045, ihre Herstellung mittels Hydrosilylierungsreaktion wird beispielsweise beschrieben in US4898910.

Für die Verwendung als niedermodulige Dichtstoffe, beispielsweise zur Fugenabdichtung im Sanitärbereich, werden gerne einkomponentige Silikone, also RTV-1 Silikone verwendet. Werden diese mit Polydiorganylsiloxanen mit Alkyldialkoxysilyl- oder Trialkoxysilyl-Endgruppen formuliert und mit Aushärtungskatalysatoren auf Zinnbasis ausgerüstet, so werden oft nur vergleichweise hochmodulig aushärtende Zusammensetzungen erhalten, welche für einen Einsatz als Dichtstoffe nicht gut geeignet sind. Diesem Problem kann teilweise begegnet werden, indem Aushärtungskatalysatoren auf Titanatbasis anstatt Zinnbasis eingesetzt werden. Titanat-katalysierte RTV-1 Silikone enthaltend Polydiorganylsiloxanen mit Alkyldialkoxysilyl- oder Trialkoxysilyl-Endgruppen sind jedoch oft nicht genügend lagerstabil. Diese Dichtmassen können aufgrund unerwünschter Reaktionen im geschlossenen Gebinde verdicken oder im schlimmeren Fall nicht mehr Aushärten.

Daneben haben RTV Silikone generell das Problem, dass sie eine ungenügende Weiterreissfestigkeit aufweisen. Dies äusserst sich beispielsweise dadurch, dass sich kleine Risse in der ausgehärteten Zusammensetzung unter minimalen Krafteinflüssen schnell ausbreiten und das ausgehärtete Material in der Folge stückweise kohäsiv oder adhäsiv ab- oder durchreisst. Dies ist für jegliche Anwendung unerwünscht, kann aber üblicherweise nur durch sorgfältige Formulierungsarbeit und -optimierung einigermassen verhindert werden, was meist nur auf Kosten verminderter anderer Eigenschaften wie Mechanik des Materials oder höherer Herstellkosten möglich ist. EP0649879 offenbart beispielsweise Silikonzusammensetzungen, welche eine spezifische Füllstoffkombination aus mit Hexamethyldisilazan oberflächenmodifizierter Fällungskieselsäure und mit Stearat beschichtetem gefälltem Calciumcarbonat sowie einen Zinnkatalysator enthalten. Durch den Einsatz dieser sehr spezifischen Füllstoffe, kann der Weiterreisswiderstand der Silikonzusammensetzung verbessert werden.

Der Nachteil von Zusammensetzungen gemäss EP0649879 liegt darin, dass diese spezifischen Füllstoffe aufwendig herzustellen und somit teuer sind. Zudem enthalten gefällte Kreiden meist herstellbedingt signifikante Mengen an Wasser, was eine sehr aufwändige Trocknung nötig macht, insbesondere wenn sie in RTV-1 Silikonen verwendet werden sollen, da sonst die Lagerstabilität nicht gewährleistet ist.

EP2641934 als weiteres Beispiel offenbart ebenfalls Silikonzusammensetzungen mit verbessertem Weiterreisswiderstand, wobei dieser Effekt erreicht wird durch eine besondere Füllstoffkombination in Verbindung mit einer besonderen Katalysatorkombination.

Der Nachteil von Zusammensetzungen wie sie in EP2641934 offenbart werden liegt darin, dass diese Zusammensetzungen erhöhte Viskositäten aufweisen und daher nur schwer manuell applizierbar oder gar pumpbar sind und ausserdem durch den zwingenden Einsatz mehrerer verschiedener metallorganischer Katalysatoren ein umwelt- oder gesundheitsschädigendes Potenzial aufweisen.

WO2018033563 als anderes Beispiel offenbart Silikonzusammensetzungen mit verbessertem Weiterreisswiderstand, was insbesondere erreicht wird durch die Kombination zweier Polydiorganosiloxanpolymere unterschiedlicher Reaktivität in einem bestimmten molaren Verhältnis. Nachteilig an der Lösung von WO2018033563 ist, dass die Formulierungsfreiheit durch die enge Wahl der Polymere eingeschränkt wird, was mit Einschränkungen in den möglichen Eigenschaften der Produkte und höheren Formulierungskosten verbunden ist.

Es besteht daher ein Bedarf an einfach herzustellenden feuchtigkeitshärtenden, kondensationsvernetzenden Silikonzusammensetzungen auf Basis von Polydiorganylsiloxanen mit Alkoxysilyl-Endgruppen, die als niedermodulige Dichtstoffe geeignet sind und dabei eine ausgezeichnete Weiterreissfestigkeit und eine ausgezeichnete Lagerstabilität aufweisen und somit die Nachteile des Standes der Technik überwinden.

### Darstellung der Erfindung

Aufgabe der vorliegenden Erfindung ist daher die Bereitstellung einer feuchtigkeitshärtenden, kondensationsvernetzenden RTV Silikonzusammensetzung basierend auf Polydiorganylsiloxanen mit Alkoxysilyl-Endgruppen, die sowohl ausgezeichnete Weiterreissfestigkeit als auch sehr gute Lagerstabilität aufweist und die als einkomponentiger, niedermoduliger Dichtstoff verwendet werden kann.

Es wurde überraschenderweise festgestellt, dass bei Verwendung einer gemahlenen Kreide mit Partikelgrösse von weniger als 2 µm als Füllstoff in einer RTV Silikonzusammensetzung basierend auf Alkoxysilan-terminierten Polydiorganosiloxanpolymeren eine unerwartet hohe Verbesserung der Weiterreissfestigkeit erreicht werden kann, was insbesondere bei Verwendung eines zinnorganischen Katalysators überraschend ist. Weiterhin kann in bevorzugten Ausführungsformen eine ungewöhnlich gute Lagerstabilität erreicht werden, insbesondere auch bei Verwendung von Titanat-basierten Katalysatoren, welche üblicherweise besonders problematisch bezüglich Lagerstabilität sind.

Demgemäss betrifft die Erfindung eine feuchtigkeitshärtende, kondensationsvernetzende Silikonzusammensetzung umfassend
a) mindestens ein vernetzbares Polydiorganylsiloxan **P** mit Alkoxysilan-Endgruppen;
b) mindestens einen Kondensationskatalysator **K;**
c) mindestens einen Vernetzer **V** mit Alkoxysilangruppen;
d) mindestens eine gemahlene Kreide **GK,** welche mindestens den Hauptanteil aller enthaltenen Füllstoffe ausmacht;
e) optional weitere Inhaltsstoffe, insbesondere ein unreaktives Polydiorganylsiloxan als Weichmacher,
dadurch gekennzeichnet, dass die gemahlene Kreide **GK** eine Partikelgrösse d50, bestimmt nach der Norm ISO 13320:2009, von mehr als 0.6 µm und weniger als 2 µm aufweist.

Im Folgenden wird die Erfindung ausführlich erläutert.

### Wege zur Ausführung der Erfindung

Die hier angegebenen Viskositäten können gemäss DIN 53018 bestimmt werden. Die Messung kann mittels Kegel-Platte-Viskosimeter MCR101 der Firma Anton-Paar, Österreich, mit Kegel-Typ CP 25-1 bei 23°C erfolgen. Die angegebenen Viskositätswerte beziehen sich auf eine Scherrate von 0,5 s⁻¹.

Die Vernetzungsreaktion umfasst Hydrolyse- und Kondensationsreaktionen von Alkoxysilyl-Gruppen. Diese sind dem Fachmann bekannt und können schematisch wie folgt dargestellt werden.

≡ Si-OR + H₂O → ≡Si-OH + ROH (1)

≡ Si-OH + HO-Si≡ → ≡Si-O-Si≡ + H₂O (2)

Bei Zutritt von Wasser und gegebenenfalls mithilfe eines Katalysators hydrolysieren Alkoxysilyl-Gruppen unter Bildung von Silanolen (Si-OH) und einem Alkohol (Schritt 1). Die Silanole sind in der Regel nicht stabil und kondensieren spontan unter Bildung von Siloxanbindungen (-Si-O-Si-), so dass Siloxane gebildet werden (Schritt 2). Sofern mehr als eine Alkoxygruppe pro Si-Atom vorliegt, können höher kondensierte Systeme gebildet werden. Bei teilweiser Hydrolyse wird nur ein Teil der Alkoxygruppen hydrolysiert und kondensiert. Die Reaktionsgeschwindigkeit der Vernetzungsreaktion hängt von der Kinetik der Teilschritte ab. Diese Kinetik kann z.B. in ¹H-NMR und ²⁹Si-NMR Experimenten für Einzelkomponenten ermittelt werden, wie z.B. beschrieben in "Zeitschrift für Naturforschung (1999), 54b, 155-164" und "Phosphorus, Sulfur, and Silicone and the Related Elements (2011), 186(2), 240-254".

Der hier verwendete Begriff der homogenen Tiefenhärtung meint eine homogene Härtung einer Silikonzusammensetzung in einer Fuge über deren gesamten Querschnitt. Dies bedeutet, dass die Eigenschaften, insbesondere die mechanischen Eigenschaften wie Härte und Elastizität, der Silikonzusammensetzung nach Aushärtung auf der Vorderseite und der Rückseite der Fuge im Rahmen der jeweiligen Messgenauigkeiten gleich sind.

Die erfindungsgemässe Zusammensetzung enthält
a) mindestens ein vernetzbares Polydiorganylsiloxan **P** mit Alkoxysilan-Endgruppen;
b) mindestens einen Kondensationskatalysator **K;**
c) mindestens einen Vernetzer **V** mit Alkoxysilangruppen;
d) mindestens eine gemahlene Kreide **GK,** welche mindestens den Hauptanteil aller enthaltenen Füllstoffe ausmacht;
e) optional weitere Inhaltsstoffe, insbesondere ein unreaktives Polydiorganylsiloxan als Weichmacher,
dadurch gekennzeichnet, dass die gemahlene Kreide **GK** eine Partikelgrösse d50, bestimmt nach der Norm ISO 13320:2009, von mehr als 0.6 µm und weniger als 2 µm aufweist.

Die erfindungsgemässe Zusammensetzung ist ein feuchtigkeitshärtendes, kondensationsvernetzendes RTV-Silikon. Dieses kann als eine einkomponentige Zusammensetzung (RTV-1 Silikon) vorliegen, bei der alle Inhaltsstoffe vermischt werden und die Mischung unter Ausschluss von Feuchtigkeit gelagert wird. Bei solchen RTV-1 Silikonen erfolgt die Aushärtung durch Kontakt mit Wasser, im Allgemeinen durch Kontakt mit Luftfeuchtigkeit.

Oder sie kann als zweikomponentige Zusammensetzung (RTV-2) vorliegen. Bevorzugt liegt die erfindungsgemässe Zusammensetzung als eine einkomponentige RTV-1 Silikonzusammensetzung vor.

### Polydiorganylsiloxan P mit Alkoxysilan-Endgruppen

Die erfindungsgemässe Zusammensetzung enthält mindestens ein vernetzbares Polydiorganylsiloxan **P** mit Alkoxysilan-Endgruppen. Solche vernetzbaren Polydiorganylsiloxane sind dem Fachmann gut bekannt. Die vernetzbaren Polydiorganylsiloxane weisen funktionelle Gruppen, insbesondere zwei oder mehr funktionelle Gruppen auf, über die eine Vernetzung möglich ist. Diese funktionellen Gruppen können in einer Seitengruppe oder einer Endgruppe des Polydiorganylsiloxans vorliegen, wobei endständige funktionelle Gruppen bevorzugt sind. Solche Polydiorganylsiloxane mit endständigen funktionellen Gruppen werden auch als α,ω-funktionelle Polydiorganylsiloxane bezeichnet. Die funktionellen Gruppen des mindestens einen vernetzbaren Polydiorganylsiloxans **P** sind Alkoxy-Gruppen.

Die Viskosität der verwendeten Polydiorganylsiloxane **P** kann in Abhängigkeit vom Einsatzzweck in breiten Bereichen variieren. Das erfindungsgemäß eingesetzte Polydiorganylsiloxan kann bei einer Temperatur von 23 °C z.B. eine Viskosität von 10 bis 500'000 mPa s, bevorzugt von 5'000 bis 400'000 mPa s, besonders bevorzugt von 6'000 bis 350'000 mPa s aufweisen.

Das vernetzbare Polydiorganylsiloxan **P** ist bevorzugt ein lineares Polydiorganylsiloxan, insbesondere ein Polydiorganylsiloxan der Formel (I)

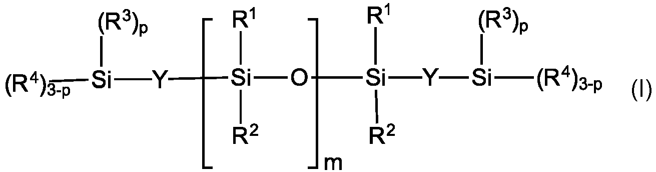

Dabei stehen die Reste R¹, R² und R³ unabhängig voneinander für lineare oder verzweigte, einwertige Kohlenwasserstoffreste mit 1 bis 12 C-Atomen, welche gegebenenfalls ein oder mehrere Heteroatome, und gegebenenfalls eine oder mehrere C-C-Mehrfachbindungen und/oder gegebenenfalls cycloaliphatische und/oder aromatische Anteile aufweisen.

Insbesondere stehen die Reste R¹ und R² für Alkylreste mit 1 bis 5, insbesondere mit 1 bis 3, C-Atomen, bevorzugt für Methylgruppen. Die Reste R³ stehen unabhängig voneinander insbesondere für Phenyl-, Vinyl oder für Methylgruppen.

Die Reste R⁴ stehen unabhängig voneinander für Alkoxygruppen mit jeweils 1 bis 13 C-Atomen, welche gegebenenfalls ein oder mehrere Heteroatome, und gegebenenfalls eine oder mehrere C-C-Mehrfachbindungen und/oder gegebenenfalls cycloaliphatische und/oder aromatische Anteile aufweisen.

Y in Formel (I) ist eine divalente Kohlenwasserstoffgruppe mit 1 bis 8 C-Atomen, bevorzugt mit 2 bis 6 C-Atomen, besonders bevorzugt eine Ethylen- oder Hexylen-Brücke, oder ein Sauerstoffatom, oder eine Gruppe der allgemeine Formel (II) 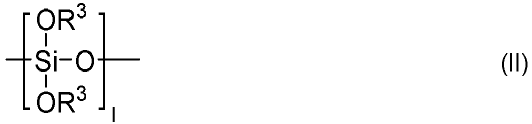 wobei R³ die oben angegebene Bedeutung besitzt und I = 1-5 ist.

Der Index m der allgemeinen Formel (I) ist so gewählt, dass das Polydiorganylsiloxan **P** bei einer Temperatur von 23 °C z.B. die obenstehende Viskosität aufweist. Der Index m der allgemeinen Formel (I) kann z.B. im Bereich von 10 bis 10'000 und bevorzugt von 100 bis 1'500 liegen.

Das Polydiorganylsiloxan **P** der Formel (I) ist insbesondere ein Polydiorganylsiloxan der Formel (la). 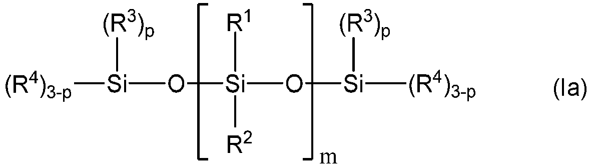 wobei R¹, R², R³, R⁴ und m dieselben Bedeutungen und dieselben bevorzugten Ausführungsformen wie beim Polydiorganylsiloxan **P** der Formel (I) angegeben aufweisen.

Das mindestens eine vernetzbare Polydiorganylsiloxan **P** ist ein Alkoxyterminiertes Polydiorganylsiloxan, bevorzugt ein vernetzbares Alkoxyterminiertes Polydimethylsiloxan. Bevorzugt eingesetzte vernetzbare Polydiorganylsiloxane sind lineare Polydiorganylsiloxane. Somit sind Reste R⁴ in Formel (I) bzw. Formel (la) unabhängig voneinander bevorzugt Alkoxy-Gruppen mit 1 bis 8 C-Atomen, welche gegebenfalls durch F, N, P, O und/oder S substituiert sein können.

Die Reste R³ in Formel (I) bzw. Formel (la) können bespielsweise unabhängig voneinander ausgewählt sein aus einer oder mehrerer der Gruppen Methyl, Ethyl, n-Propyl, i-Popyl, n-Butyl, i-Butyl, n-Pentyl, i-Pentyl, n-Hexyl, i-Hexyl, n-Heptyl, i-Heptyl, n-Octyl, i-Octyl, Cyclopentyl, Cylcohexyl, Phenyl, Vinyl, Allyl, Methoxymethyl, 2-Methoxyethyl Ethoxymethyl, 2-(2-Methoxyethoxy)ethyl, Trifluorpropyl, 2-Aminoethyl, 6-Aminohexyl.

Bevorzugt sind die Reste R³ in Formeln (I) und (la) unabhängig voneinander ausgewählt aus Alkylgruppen mit 1 bis 6, insbesondere mit 1 bis 3, C-Atomen, wie Propyl, Ethyl und Methyl, wobei Ethyl und Methyl bevorzugt sind und Methyl besonders bevorzugt ist.

In einer besonderen Ausführungsform sind alle Reste R³ in Formeln (I) und (la) gleich und ausgewählt aus Alkylgruppen mit 1 bis 6, insbesondere mit 1 bis 3, C-Atomen, wie Propyl, Ethyl und Methyl, wobei Methyl und Ethyl bevorzugt sind und Methyl besonders bevorzugt ist.

Die Polydiorganylsiloxane der allgemeinen Formel (I) und/oder der Formel (la) machen bevorzugt mindestens 90%, bevorzugt mindestens 95%, besonders bevorzugt mindestens 99% der Gesamtmasse an vorhandenem Polydiorganylsiloxan **P** einer erfindungsgemässen Zusammensetzung aus.

Geeignete Polydiorganosiloxane, wie sie in Formel (I) und/oder Formel (la) dargestellt sind, sind bekannt und kommerziell erhältlich. Auch die Herstellung derartiger Polydiorganosiloxane erfolgt in bekannter Art und Weise, wie beispielsweise beschrieben in EP0658588.

Polydiorganylsiloxane der allgemeinen Formel (la) können durch Kondensationsreaktion von OH-terminierten Polydiorganylsiloxanen mit Alkoxy-funktionellen Silanen oder Siloxanen hergestellt werden. Die Herstellung durch Kondensationsreaktion kann nach Verfahren erfolgen wie beispielsweise in EP763557 oder EP0559045 beschrieben. Alternativ können Polydiorganylsiloxane der allgemeinen Formel (I) durch Hydrosilylierungsreaktion von Vinyl-terminierten Polydiorganylsiloxanen mit Si-H funktionellen Alkoxy-Silanen oder-Siloxanen bzw. von Si-H terminierten Polydiorganylsiloxanen mit Vinyl-funktionellen Alkoxy-Silanen oder-Siloxanen hergestellt werden. Die Herstellung durch Hydrosilylierungsreaktion kann nach Verfahren erfolgen wie beispielsweise in US4898910 beschrieben.

In einer bevorzugten Ausführungsform werden Polydiorganylsiloxane der allgemeinen Formel (I) und Formel (la) durch Kondensationsreaktion von OH-terminierten Polydiorganylsiloxanen mit Alkoxy-funktionellen Silanen oder Siloxanen hergestellt. In einer besonders bevorzugten Ausführungsform werden Polydiorganylsiloxane der allgemeinen Formel (I) und Formel (la) durch Kondensationsreaktion von OH-terminierten Polydiorganylsiloxanen mit Alkoxy-funktionellen Silanen oder Siloxanen unter Katalyse durch Amidine oder Guanidine, ggf. unter Co-Katalyse eines Metallkatalysators, hergestellt. Geeignete Amidin- und Guanidin-Katalysatoren werden beispielsweise in WO 2016/207156 sowie in WO 2015/193208 beschrieben.

In bevorzugten Ausführungsformen der feuchtigkeitshärtenden Silikonzusammensetzung wird das vernetzbare Polydiorganylsiloxan **P** in einer Kondensationsreaktion aus OH-terminiertem Polydiorganylsiloxan und einem Tri- oder Tetraalkoxysilan hergestellt, bevorzugt einem Methyltrialkoxysilan oder einem Vinyltrialkoxysilan.

In besonders bevorzugten Ausführungsformen der feuchtigkeitshärtenden Silikonzusammensetzung wird die Umsetzung des OH-terminierten Polydiorganylsiloxans mit dem Tri- oder Tetraalkoxysilan in Gegenwart eines Amidin- oder Guanidinkatalysators durchgeführt.

Die feuchtigkeitshärtende Silikonzusammensetzung enthält bevorzugt zwischen 10 Gew.-% und 60 Gew.-%, insbesondere zwischen 15 Gew.-% und 50 Gew.-%, bevorzugt zwischen 20 Gew.-% und 40 Gew.-% Polydiorganylsiloxan **P,** bezogen auf die gesamte Zusammensetzung.

### Vernetzer V mit Alkoxysilangruppen

Die erfindungsgemässe Zusammensetzung umfasst ferner mindestens einen Vernetzer **V** mit Alkoxysilangruppen. Alkoxysilangruppen sind hydrolysierbare Gruppen, die, gegebenenfalls unter vorgängiger Hydrolyse und Bildung einer Silanolgruppe, mit den funktionellen Gruppen des Polydiorganylsiloxans unter Bildung einer Siloxan-Bindung reagieren können. Bevorzugt erfolgt die Reaktion zwischen der funktionellen Gruppe des Polydiorganylsiloxans und der hydrolysierbaren Gruppe des Vernetzers durch eine Kondensationsreaktion, gegebenenfalls folgend auf eine Hydrolysereaktion mindestens einer der involvierten Alkoxysilangruppen. Dabei werden in der Regel Nebenprodukte wie Wasser oder Alkohole freigesetzt.

Erfindungsgemässe Vernetzer **V** mit hydrolysierbaren Resten entsprechen insbesondere der allgemeinen Formel (III)

R⁵ₙSiX₄₋ₙ (III)

wobei R⁵ unabhängig voneinander ein nicht hydrolysierbarer einwertiger Kohlenwasserstoffrest mit 1 bis 18 C-Atomen, welcher gesättigt oder ungesättigt ist und gegebenenfalls eine oder mehrere funktionelle Gruppen enthaltend die Elemente F, N, P, O und/oder S aufweist, ist, n gleich 0, 1, 2 oder 3 ist, bevorzugt 0 oder 1, X unabhängig voneinander eine OH-Gruppe oder eine lineare oder verzweigte Alkoxy-Gruppen mit 1 bis 8 C-Atomen, welche gegebenfalls durch F, N, P, O und/oder S substituiert sein kann und gegebenenfalls ungesättigte und/oder cycloaliphatische und/oder aromatische Anteile aufweist.

Sofern X für eine Alkoxy-Gruppe steht, sind Alkoxy-Gruppen X unabhängig voneinander Alkoxy-Gruppen mit 1 bis 8 C-Atomen, welche gegebenenfalls durch F, N, P, O und/oder S substituiert sein können und gegebenenfalls ungesättigte und/oder cycloaliphatische und/oder aromatische Anteile aufweisen. Die Alkoxy-Gruppen X können beispielsweise unabhängig voneinander ausgewählt sein aus einer oder mehrerer der Gruppen Methoxy, Ethoxy, n-Propoxy, i-Propoxy, n-Butoxy, i-Butoxy, n-Pentoxy, i-Pentoxy, n-Hexoxy, i-Hexoxy, n-Heptoxy, i-Heptoxy, n-Octoxy, i-Octoxy, Cyclopentoxy, Cylcohexoxy, Phenoxy, Vinyloxy, Allyloxy, Methoxymethoxy, 2-Methoxyethoxy, Ethoxymethoxy, 2-(2-Methoxyethoxy)ethoxy, Trifluorpropoxy, 2-Aminoethoxy, 6-Aminohexoxy.

Bevorzugt sind die Alkoxy-Gruppen X unabhängig voneinander ausgewählt aus Alkoxy-Gruppen mit 1 bis 6, insbesondere mit 1 bis 3, C-Atomen, wie Propoxy, Ethoxy und Methoxy, wobei Methoxy und Ethoxy bevorzugt sind und Methoxy besonders bevorzugt ist.

In einer besonderen Ausführungsform sind alle Gruppen X gleich und ausgewählt aus Alkoxy-Gruppen mit 1 bis 6, insbesondere mit 1 bis 3, C-Atomen, wie Propoxy, Ethoxy und Methoxy, wobei Methoxy und Ethoxy bevorzugt sind und Methoxy besonders bevorzugt ist.

Beispiele für Vernetzer der allgemeinen Formel (III) sind Methyltrimethoxysilan, Dimethyldimethoxysilan, Ethyltrimethoxysilan, Propyltrimethoxysilan, i-Butyltrimethoxysilan, Octyltrimethoxysilan, Hexadecyltrimethoxysilan, Vinyltrimethoxysilan, Vinyltris(2-methoxyethoxy)silan, Vinyldimethoxymethylsilan, Phenyltrimethoxysilan, Tetramethylorthosilikat, 3-Methacryloxypropyltrimethoxysilan, 3-Mercaptopropyltrimethoxysilan, 3-Aminopropyltrimethoxysilan, 3-Glycidoxypropyltrimethoxysilan, 3-Aminopropyltrimethoxysilan, 2-Aminoethyl-3-aminopropyltrimethoxysilan, (Trimethoxysilyl)methyl-O-methylcarbamat, N-(Trimethoxysilyl)methyl)methacrylamid, N-(Trimethoxysilyl)methyl)cyclohexanamin, N,N'-(Methoxy(methyl)silandiyl)dibenzamid und die entsprechenden Verbindungen, bei denen alle Methoxygruppen entweder durch Ethoxygruppen oder durch Propoxygruppen ersetzt sind, also z.B. Methyltriethoxysilan usw.

In einer bevorzugten Ausführungsform der Erfindung sind alle Gruppen X Alkoxy-Gruppen, besonders bevorzugt Methoxy- und/oder Ethoxy-Gruppen.

Gemäss der vorhergehenden Beschreibung, können Vernetzer **V,** insbesondere Vernetzer **V** der allgemeinen Formel (III), ganz oder teilweise hydrolysiert und zu Siloxanen kondensiert vorliegen. Solche kondensierten Siloxane können aus einem oder mehreren verschiedenen Vernetzern der allgemeinen Formel (III) hergestellt werden, wobei mindestens einer der zugrundeliegenden Vernetzer ein Trialkoxysilan oder ein Tetraalkoxysilan ist, und wobei der mittlere Kondensationsgrad des Siloxans bevorzugt mindestens 4 ist. Bei dem Siloxan handelt es sich somit bevorzugt um ein Alkoxygruppen enthaltendes Kondensationsprodukt der monomeren Alkoxysilane der allgemeinen Formel (III).

Es können Mono-, Di-, Tri- oder Tetraalkoxysilane oder Mischungen davon für die teilweise Hydrolyse und Kondensation eingesetzt werden, wobei mindestens ein Alkoxysilan ein Tri- oder Tetraalkoxysilan ist. In Abhängigkeit von den eingesetzten Alkoxysilanen und der Reaktionsführung, insbesondere der zugegebenen Menge an Wasser, kann der Kondensationsgrad und der Anteil der im gebildeten Siloxan verbleibenden Alkoxygruppen eingestellt werden, wobei der mittlere Kondensationsgrad des Siloxans bevorzugt mindestens 4 ist. Das Siloxan kann aus linearen und/oder verzweigten Ketten, Ringen oder Käfigen bestehen. Dem Fachmann ist klar, dass meist Mischungen solcher Strukturelemente vorliegen. Die Alkoxysilane können am Si-Atom gebundene nicht hydrolysierbare Gruppen, insbesondere einwertige Kohlenwasserstoffreste, die gegebenenfalls eine oder mehrere funktionelle Gruppen aufweisen, aufweisen, die im gebildeten Siloxan verbleiben. Der als Nebenprodukt gebildete Alkohol kann entfernt werden, z.B. durch Abdampfen im Vakuum. Daraus gebildete Alkoxygruppen enthaltende Siloxane sind bekannt und im Handel erhältlich.

Daneben können auch zusätzlich Monoalkoxysilane und/oder Dialkoxysilane zur Herstellung des Alkoxygruppen enthaltenden Siloxans mit verwendet werden. Beispiele sind Trimethylmethoxysilan, Triethylmethoxysilan, Triphenylmethoxysilan, Dimethyldimethoxysilan, Diethyldimethoxysilan und Diphenyldimethoxysilan und die entsprechenden Silane, in denen alle Methoxygruppen entweder durch Ethoxygruppen oder Propoxygruppen ersetzt sind. Die Monoalkoxysilane und/oder Dialkoxysilane können z.B. eingesetzt werden, um den Kondensationsgrad oder die Verzweigung des gebildeten Siloxans einzustellen.

Bevorzugte Tri- oder Tetraalkoxysilane, die zur Herstellung des Alkoxygruppen enthaltenden Siloxans eingesetzt werden, sind Methyltrimethoxysilan, Methyltriethoxysilan, Vinyltrimethoxysilan, Vinyltriethoxysilan, n-Propyltrimethoxysilan, n-Propyltriethoxysilan, Phenyltrimethoxysilan, Phenyltriethoxysilan, 2-Aminoethyl-3-aminopropyltrimethoxysilan, 2-Aminoethyl-3-aminopropyltriethoxysilan, 3-Glycidoxypropyltrimethoxysilan, 3-Glycidoxypropyltriethoxysilan, 3-Mercaptopropyltrimethoxysilan, 3-Mercaptopropyltriethoxysilan, Tetraethoxysilan, Tetramethoxysilan, und Mischungen davon.

In bevorzugten Ausführungsformen der feuchtigkeitshärtenden Silikonzusammensetzung umfasst Vernetzer **V** ein Aminogruppen-haltiges Alkoxysilan oder -siloxan, insbesondere eines, dass ausgewählt ist aus 3-Aminopropyltrimethoxysilan, 3-Aminopropyltriethoxysilan, N-(2-Aminoethyl)-3-aminopropyl-trimethoxysilan, N-(2-Aminoethyl)-3-aminopropyl-methyldimethoxysilan, sowie oligomeren Siloxanen erhalten aus der partiellen Kondensation mindestens einer dieser Silane und gegebenenfalls weiteren Silanen. Diese Ausführungsformen sind besonders bevorzugt in Fällen, wo zinnorganische Verbindungen als Katalysator **K** eingesetzt werden.

Die Verwendung eines Aminogruppen-haltiges Alkoxysilans oder -siloxans als Bestandteil der Vernetzer **V** hat den Vorteil, dass durch die Aminogruppe (insbesondere bei Vorhandensein einer primären Aminogruppe) die Aushärtung der Silikonzusammensetzung beschleunigt. Zudem können Vernetzer **V** mit Aminogruppen die Adhäsion auf vielen Substraten verbessern.

In denselben oder anderen bevorzugten Ausführungsformen der feuchtigkeitshärtenden Silikonzusammensetzung umfasst Vernetzer **V** ein oligomeres Siloxan, insbesondere ein oligomeres Siloxan mit Alkoxysilangruppen und Vinylgruppen. Diese Ausführungsformen sind besonders bevorzugt in Fällen, wo zinnorganische Verbindungen als Katalysator **K** eingesetzt werden. In Ausführungsformen, wo ein Titanat als Katalysator **K** eingesetzt wird, umfasst der Vernetzer **V** bevorzugt kein oligomeres Siloxan.

Die Verwendung von oligomeren Siloxanen als Bestandteil der Vernetzer **V** hat den Vorteil, dass die Menge an gebildetem Spaltalkohol bei der Vernetzung der Alkoxysilangruppen-haltigen Vernetzer **V** und Polydiorganylsiloxanpolymere **P** reduziert wird, was die Menge an VOC (volatile organic carbon) vermindert und die Zusammensetzung noch unproblematischer im Bezug auf EHS (environment, health and safety) macht.

Die feuchtigkeitshärtende Silikonzusammensetzung enthält bevorzugt zwischen 1 Gew.-% und 7.5 Gew.-%, insbesondere zwischen 1.5 Gew.-% und 5 Gew.-%, bevorzugt zwischen 2 Gew.-% und 4.5 Gew.-% Vernetzer **V,** bezogen auf die gesamte Zusammensetzung. Dabei ist bevorzugt, dass Vernetzer **V** mindestens ein Aminogruppen-haltiges Alkoxysilan oder -siloxan umfasst. Weiterhin ist bevorzugt, dass Vernetzer **V** mindestens ein oligomeres Siloxan, insbesondere ein oligomeres Siloxan mit Alkoxysilangruppen und Vinylgruppen, umfasst. Diese Ausführungsformen sind besonders bevorzugt in Fällen, wo zinnorganische Verbindungen als Katalysator **K** eingesetzt werden.

In besonders bevorzugten Ausführungsformen umfasst die feuchtigkeitshärtende Silikonzusammensetzung zwischen 1 Gew.-% und 2.5 Gew.-% an Vernetzer **V** nach Formel (III), insbesondere mit R⁵ ausgewählt aus Vinyl-, Phenyl- und Propylgruppen, sowie zusätzlich zwischen 0.5 und 1.5 Gew.-% an Vernetzer **V,** der ein oligomeres Siloxan darstellt, insbesondere ein oligomeres Siloxan mit Alkoxysilangruppen und oder Vinylgruppen.

### Kondensationskatalysator K

In der erfindungsgemässen Zusammensetzung ist ferner mindestens ein Kondensationskatalysator **K** enthalten. Dieser dient zur Katalyse der zwischen dem vernetzbaren Polydiorganylsiloxan **P** und dem Vernetzer **V** bei Anwesenheit von Feuchtigkeit bzw. Wasser stattfindenden Hydrolyse und Kondensation.

Bei dem Kondensationskatalysator **K** kann es sich um jeden üblichen, für diese Systeme eingesetzten Katalysator handeln, wobei es sich bevorzugt um einen Metallkatalysator handelt. Metallkatalysatoren können insbesondere Verbindungen oder Komplexe von Elementen der Gruppen 1, 2, 4, 12, 14 oder 15 des Periodensystems der Elemente, bevorzugt der Gruppen 4 oder 14, sein. Der Kondensationskatalysator **K** ist bevorzugt eine zinnorganische Verbindung oder ein Titanat bzw. Organotitanat. Ganz besonders bevorzugt ist der Kondensationskatalysator eine zinnorganische Verbindung. Diese sind im Handel erhältlich. Es ist auch möglich und in gewissen Fällen sogar bevorzugt, Mischungen verschiedener Katalysatoren als Kondensationskatalysator **K** einzusetzen.

Bevorzugte zinnorganische Verbindungen für diesen Zweck sind Dialkylzinnverbindungen, z.B. ausgewählt aus Dimethylzinndi-2-ethylhexanoat, Dimethylzinndilaurat, Di-n-butylzinndiacetat, Di-n-butylzinndi-2-ethylhexanoat, Di-n-butylzinndicaprylat, Di-n-butylzinndi-2,2-dimethyloctanoat, Di-n-butylzinndilaurat, Di-n-butylzinn-distearat, Di-n-butylzinndimaleinat, Di-n-butylzinndioleat, Di-n-octylzinndi-2-ethylhexanoat, Di-n-octylzinndi-2,2-dimethyloctanoat, Di-n-octylzinndimaleinat, Di-n-octylzinndilaurat, Di-n-butylzinnoxid und Di-n-octylzinnoxid.

Geeignete zinnorganische Verbindungen können z.B. von der Firma TIB, Deutschland, kommerziell erworben werden.

Als Titanate bzw. Organotitanate werden Verbindungen bezeichnet, welche mindestens einen über ein Sauerstoffatom an das Titanatom gebundenen Liganden aufweisen. Als über eine Sauerstoff-Titan-Bindung an das Titanatom gebundene Liganden eignen sich dabei z.B. diejenigen, die ausgewählt sind aus einer Alkoxygruppe, Sulfonatgruppe, Carboxylatgruppe, Dialkylphosphatgruppe, Dialkylpyrophosphatgruppe und Acetylacetonatgruppe. Bevorzugte Titanate sind z.B. Tetrabutyl- oder Tetraisopropyltitanat. Weiterhin geeignete Titanate weisen mindestens einen mehrzähnigen Liganden, auch Chelatligand genannt, auf. Insbesondere ist der mehrzähnige Ligand ein zweizähniger Ligand.

Geeignete Titanate sind beispielsweise unter den Handelsnamen Tyzor^{®} AA-105, PITA, TnBT, TPT, TOT, IAM, IBAY kommerziell erhältlich von der Firma Dorf Ketal, Indien.

Weiterhin bevorzugt sind Zirkonate, Bismutate und Aluminate.

Ebenfalls geeignet als als Kondensationskatalysator **K** sind Zirkonate, Bismutate und Aluminate.

Geeignete Zirkonate sind beispielsweise unter den Handelsnamen Tyzor^{®} NBZ, NPZ, TEAZ, 212, 215, 217, 223 kommerziell erhältlich von der Firma Dorf Ketal oder unter den Handelsnamen K-Kat 4205 oder K-Kat XC-6212 von der Firma King Industries.

Geeginete Bismutate sind insbesondere Bismutcarboxylate. Die Bismutcarboxylate sind aus Bi(III)-Verbindungen mit den organischen Säuren R-COOH nach den literaturbekannten Verfahren herstellbar oder als handelsübliche Produkte unter den jeweiligen Markennamen erhältlich, wie Bismuttrioctoat oder Bismuttrineodecanoat, beispielsweise unter den Markennamen Borchi^{®} Kat (Fa. Borchers GmbH) oder Tegokat^{®} (Fa. Goldschmidt TIB GmbH), Neobi^{®} 200, Fa. Shepherd, Coscat^{®}, Fa. Caschem. Weiterhin geeignete Bismutate sind beispielsweise erhältlich unter dem Handelsnamen K-Kat 348 und K-Kat XC-8203 von der Firma King Industries.

Ein geeignetes Aluminat ist beispielsweise erhältlich unter dem Handelsnamen K-Kat 5218 von der Firma King Industries.

Weiterhin geeignet als Kondensationskatalysator **K** sind Amidine und Guanidine, insbesondere solche wie in WO 2016/207156, in WO 2013/087680, sowie in WO 2015/193208 beschrieben.

Die feuchtigkeitshärtende Silikonzusammensetzung enthält bevorzugt zwischen 0.01 Gew.-% und 5 Gew.-%, insbesondere zwischen 0.025 Gew.-% und 4 Gew.-%, bevorzugt zwischen 0.03 Gew.-% und 2.5 Gew.-% Kondensationskatalysator **K,** bezogen auf die gesamte Zusammensetzung.

In Ausführungsformen, in denen eine zinnorganische Verbindung als Kondensationskatalysator **K** eingesetzt wird, liegt der bevorzugte Gehalt an Kondensationskatalysator **K** insbesondere zwischen 0.025 Gew.-% und 1 Gew.-%.

In Ausführungsformen, in denen ein Titanat als Kondensationskatalysator **K** eingesetzt wird, liegt der bevorzugte Gehalt an Kondensationskatalysator **K** insbesondere zwischen 1.5 Gew.-% und 2.5 Gew.-%.

### Gemahlene Kreide GK

Die erfindungsgemässe Zusammensetzung enthält mindestens eine gemahlene Kreide **GK,** welche mindestens den Hauptanteil aller enthaltenen Füllstoffe ausmacht, wobei die gemahlene Kreide **GK** eine Partikelgrösse d50, bestimmt nach der Norm ISO 13320:2009, von mehr als 0.6 µm und weniger als 2 µm aufweist.

Die Angabe der Partikelgrösse oder synonym Teilchengrösse d50 bezieht sich dabei darauf, dass 50 Gew.-% der Teilchen eine Grösse aufweisen, welche gleich oder kleiner ist als der angegebene Wert. Die Teilchengrösse d50 kann typischerweise durch Laserlichtstreuung gemäss der Norm ISO 13320:2009, beispielsweise mit dem Gerät CILAS 920 der Firma CILAS oder dem Gerät Malvern Mastersizer 3000 der Firma Malvern Panalytical, bestimmt werden.

Die mindestens eine gemahlene Kreide **GK** muss mindestens den Hauptteil aller enthaltenen Füllstoffe ausmachen, was bedeutet, dass die gemahlene Kreide **GK** bezogen auf alle enthaltenen Füllstoffe in der Zusammensetzung mehr als 50 Gew.-%, bevorzugt mehr als 75 Gew.-%, insbesondere mehr als 80 Gew-.% aller enthaltenen Füllstoffe ausmacht, bezogen auf das Gesamtgewicht aller enthaltenen Füllstoffe. Weitere Füllstoffe werden weiter unten beschrieben.

Es ist für die Erfindung wesentlich, dass eine gemahlene Kreide eingesetzt wird und nicht etwa eine Fällungskreide. Fällungskreiden enthalten herstellungsbedingt zu viel Wasser, was auch durch aufwändige Trocknungsmassnahmen kaum vollständig zu entfernen ist. Durch den hohen Wassergehalt wird jedoch die Lagerstabilität beeinträchtigt, besonders im Fall von RTV-1 Zusammensetzungen, welche Alkoxysilan-funktionelle Polymere und Vernetzer enthalten, wie es in der vorliegenden Erfindung der Fall ist.

Die mindestens eine gemahlene Kreide **GK** besitzt eine aussergewöhnlich kleine Partikelgrösse d50 von weniger als 2 µm und mehr als 0.6 µm, insbesondere zwischen 0.7 µm und 1.6 µm, bevorzugt zwischen 0.7 µm und 1 µm, besonders bevorzugt zwischen 0.7 µm und 0.9 µm. Mit dieser Eigenschaft kann die gemahlene Kreide **GK** wesentlich zu den erfindungsgemässen Vorteilen beitragen. Wenn die gemahlene Kreide eine Partikelgrösse d50 von 2 µm oder mehr aufweist, nimmt die Weiterreissfestigkeit deutlich ab, insbesondere bei Verwendung von einem zinnorganischen Kondensationsatalysator **K.** Gleichzeitig nimmt die Lagerstabilität deutlich ab, wenn die Partikelgrösse d50 der gemahlenen Kreide **GK** 0.6 µm oder weniger beträgt. Zudem sind gemahlene Kreiden mit Partikelgrössen d50 unterhalb von Kreiden 0.6 µm nur aufwändig herstellbar, und die Kreiden weisen einen merklich höheren Wassergehalt auf, was die Lagerstabilität der Silikonzusammensetzung negativ beeinflusst.

Die gemahlene Kreide kann beschichtet oder unbeschichtet sein. Geeignete Beschichtungen sind dem Fachmann bekannt und umfassen beispielsweise Stearatbeschichtungen und Silanbeschichtungen.

Geeignete und bevorzugte gemahlene Kreiden **GK** sind beispielsweise Calatem^{®} C16T (Provençale), Calatem^{®} CT (Provençale), Calatem^{®} 06NGT (Provençale), Omyabond^{®} 120 (Omya), Omyabond^{®} 420 (Omya), Omyabond^{®} 460 (Omya) und Omyabond^{®} 520 (Omya).

Die gemahlene Kreide **GK** weist normalerweise herstellungsbedingt einen vorteilhaft niedrigen Wassergehalt auf. Trotzdem kann es bezüglich Lagerstabilität (insbesondere bei RTV-1 Zusammensetzungen) vorteilhaft sein, die gemahlenen Kreiden **GK** zusätzlich zu trocknen. Dazu eignet sich beispielsweise eine Vakuumierung bei erhöhter Temperatur, z.B. mindestens 60°C, bevorzugt 80°C bis 100°C, oder ohne Vakuum bei 120°C über eine längere Zeit, z.B. 24h. Der Wassergehalt der gemahlenen Kreide **GK** ist bevorzugt < 0.2 Gew.-%, insbesondere < 0.1 Gew.-%, bezogen auf das Gesamtgewicht der gemahlenen Kreide **GK.**

In bevorzugten Ausführungsformen der feuchtigkeitshärtenden Silikonzusammensetzung enthält die Silikonzusammensetzung zwischen 30 Gew.-% und 70 Gew.-%, bevorzugt zwischen 40 Gew.-% und 60 Gew.-%, insbesondere zwischen 45 Gew.-% und 55 Gew.-% gemahlene Kreide **GK,** bezogen auf die gesamte Zusammensetzung.

Die Silikonzusammensetzung enthält neben der gemahlenen Kreide **GK** gegebenenfalls einen oder mehrere weitere Füllstoffe. Diese weiteren Füllstoffe können z.B. sowohl rheologische Eigenschaften der nicht ausgehärteten Zusammensetzung als auch die mechanischen Eigenschaften und die Oberflächenbeschaffenheit der ausgehärteten Zusammensetzung beeinflussen. Es kann von Vorteil sein, in einer Zusammensetzung verschiedene Füllstoffe einzusetzen.

Die erfindungsgemässe Zusammensetzung kann beispielsweise 1 bis 15 Gew.-%, bevorzugt 2 bis 10 Gew.-%, weitere Füllstoffe enthalten.

Beispiele für geeignete weitere Füllstoffe sind anorganische oder organische Füllstoffe, wie natürliche, gemahlene Kreiden mit Partikelgrössen d50 von mehr als 2 µm oder Fällungskreiden, welche beide gegebenenfalls oberflächenbehandelt sind, z.B. mit Fettsäuren; Kieselsäuren (Silica), insbesondere pyrogene Kieselsäuren, welche gegebenenfalls oberflächenbehandelt sind, z.B. mit Silikonölen; Aluminiumhydroxide wie Aluminiumtrihydroxid; Russ, insbesondere Industrierusse; Bariumsulfat, Dolomit; Kieselerden; Kaolin; Hohlkugeln; Quar;, calcinierte Aluminiumoxide; Aluminiumsilicate; Magnesium-Aluminiumsilicate; Zirkoniumsilicate; Cristobalitmehl; Diatomeenerde; Glimmer; Titanoxide; Zirconiumoxide; Gips; Graphit; Kohlefasern; Zeolithe; sowie Glasfasern, deren Oberfläche gegebenenfalls mit einem Hydrophobierungsmittel behandelt ist.

Die erfindungsgemässe Zusammensetzung enthält vorzugsweise keine gefällte Kieselsäure, da diese die Lagerstabilität der Zusammensetzung beeinträchtigen kann.

Pyrogene Kieselsäuren hingegen sind möglich und bevorzugt. Die Zugabe von pyrogenen Kieselsäuren verbessert die Standfestigkeit und die thixotropen Eigenschaften der Zusammensetzung.

Die feuchtigkeitshärtende Silikonzusammensetzung enthält somit bevorzugt zusätzlich eine, bevorzugt hydrophobisierte, pyrogene Kieselsäure, insbesondere in einer Menge von zwischen 1 Gew.-% und 15 Gew.-%, bevorzugt zwischen 2 Gew.-% und 10 Gew.-%, bezogen auf die gesamte Zusammensetzung.

### Optionale weitere Inhaltsstoffe

Die erfindungsgemässe Zusammensetzung kann gegebenenfalls noch weitere Bestandteile enthalten, wie sie für feuchtigkeitshärtende, kondensationsvernetzende Silikonzusammensetzungen üblich sind. Derartige zusätzliche Bestandteile sind z.B. Weichmacher, Haftvermittler, Härtungsbeschleuniger, OH-Fänger, Trocknungsmittel, Benetzungshilfsmittel, Rheologiemodifikatoren, Thixotropierungsmittel, Verarbeitungshilfsmittel, Biozide, UV-Stabilisatoren, Hitzestabilisatoren, Flammschutzmittel, Farbpigmente, Geruchsstoffe, Antistatika, Emulgatoren.

Bevorzugt enthält die die erfindungsgemässe Zusammensetzung mindestens einen dieser genannten optionalen weiteren Inhaltsstoffe.

Ein Beispiel für gegebenenfalls einzusetzende Weichmacher sind trialkylsilylterminierte Polydimethylsiloxane, wobei die trialkylsilylterminierten Polydimethylsiloxane bevorzugt eine Viskosität bei 23°C im Bereich von 1 bis 10'000 mPa·s aufweisen. Es können auch z.B. trimethylsilylterminierte Polydimethylsiloxane eingesetzt werden, bei denen einige der Methylgruppen durch andere organische Gruppen wie zum Beispiel Phenyl-, Vinyl- oder Trifluorpropylgruppen ersetzt sind. Das Polydimethylsiloxan kann auch monofunktionell sein, d.h. ein Ende ist reaktiv, z.B. über eine Hydroxy-Endgruppe. Bestimmte Kohlenwasserstoffe können ebenfalls als Weichmacher eingesetzt werden. Geeignete Kohlenwasserstoffe können z.B. unter dem Handelsnamen Hydroseal G 232 H von der Firma Total kommerziell erworben werden.

Beispiele für gegebenenfalls einzusetzende Haftvermittler sind Aminoalkohole wie Triethanolamin oder aminhaltige Polyole, die beispielsweise unter dem Handelsnamen Jeffamin^{®} kommerziell erhältlich sind. Silylgruppen-haltige Verbindungen, die hydrolysierbare Reste am Si-Atom tragen, insbesondere Aminosilane wie beispielsweise 3-Aminopropyltrimethoxysilan, werden den Vernetzern der allgemeinen Formel (III) zugeordnet, da sie an der Vernetzungsreaktion teilnehmen können.

Es kann vorteilhaft sein, zwei oder mehrere Haftvermittler zu kombinieren.

Die gegebenenfalls eingesetzten Härtungsbeschleuniger sind Verbindungen, die die Vernetzung der feuchtigkeitshärtenden, kondensationsvernetzenden Zusammensetzung beschleunigen, wenn sie zusammen mit dem erfindungsgemässen Kondensationskatalysator **K** eingesetzt werden. Beispiele für solche Härtungsbeschleuniger sind Guanidine, insbesondere silylierte Guanidine oder mit Guanidin-Gruppen modifizierte Oligodiorganylsiloxane, Diorganosulfoxide, Imidazole, insbesondere alkylierte Imidazole wie N-Methylimidazol oder Benzimidazol, Amidine, insbesondere silylierte Amidine oder mit Amidin-Gruppen modifizierte Oligodiorganylsiloxane oder cyclische Amidine wie 1 ,8-diazabicyclo[5.4.0]undec-7-en (DBU) und Amine, insbesondere Alkylamine wie Triethylamin oder silylierte Amine wie N-Butyl-3-aminopropyltrimethoxysilan. Härtungsbeschleuniger, die Alkoxysilyl-Gruppen enthalten, wirken gleichzeitig auch als Vernetzer.

Härtungsbeschleuniger können in Mengen von 0 bis 5 Gew-%, vorzugsweise von 0.01 bis 2 Gew-% bezogen auf das Gesamtgewicht der feuchtigkeitshärtenden Zusammensetzung zugegeben werden. Der Härtungsbeschleuniger kann aus einer Einzelsubstanz oder einer Mischung von zwei oder mehr Substanzen bestehen.

Die gegebenfalls eingesetzten OH-Fänger sind Verbindungen, die mit gegebenfalls vorhandenen OH-Gruppen reagieren. OH-Gruppen können vorhanden sein als unverschlossene Kettenenden von Polydiorganylsiloxanen, als OH-Gruppen auf Füllstoffen und als Wasser. OH-Fänger können Si-N haltige Verbindungen sein. Beispiele für OH-Fänger sind Hexamethyldisilazan (HMDZ), Hexamethylcyclotrisilazan, Octamethyltetrasilazan, Bis(trimethylsilyl)harnstoff. HMDZ ist der am meisten bevorzugte OH-Fänger.

Die feuchtigkeitshärtende Silikonzusammensetzung enthält weiterhin bevorzugt eine Säure oder deren konjugierte Base, welche innerhalb der Zusammensetzung möglicherweise eine Pufferwirkung entfaltet und die Zusammensetzung stabilisiert und damit die Lagerstabilität erhöht. Insbesondere geeignet sind schwache bis mittelstarke Säuren, bevorzugt solche mit mit pKs-Werten von zwischen 4 und 8.

Geeignete und bevorzugte solche Säuren sind zum Beispiel Carbonsäuren wie z.B. Fettsäuren, Neodecansäure oder Essigsäure, sowie optional teilweise veresterte Phosphor- oder Phosphonsäuren.

Bevorzugt enthält die Zusammensetzung zusätzlich zwischen 0.1 Gew.-% und 1.5 Gew.-%, bevorzugt zwischen 0.2 Gew.-% und 1.0 Gew.-%, bezogen auf die gesamte Zusammensetzung, einer Säure oder deren konjugierte Base, vorzugsweise einer teilweise veresterten Phosphorsäure und/oder einer teilweise veresterten Phosphonsäure.

Ganz besonders bevorzugt enthält die erfindungsgemässe Zusammensetzung mindestens eine teilweise veresterte Phosphor- oder Phosphonsäure. Bei Phosphorsäureestern sind Diester bevorzugt, bei Phosphonsäureestern Monoester. Insbesondere enthalten diese Ester genau eine P-OH Gruppe. Beispiele solcher teilweise veresterten Phosphor- oder Phosphonsäuren sind kommerziell erhältlich, beispielsweise unter dem Handelsnamen Stabilizer POP^{®} von Wacker, TIB STAB^{®} 115 von TIB oder Lakeland^{®} TPA 800 von Lakeland.

Ganz besonders bevorzugt wird diese Säure vorab mit dem Kondensationskatalysator **K** komplexiert und als Mischung zur Formulierung zugegeben. Eine solche Vorabmischung führt zu einer besonders guten Lagerstabilität der Zusammensetzung. Bei zinnorganischen Katalysatoren ist es dabei insbesondere vorteilhaft, ein molares Verhältnis von Phosphor- oder Phosphonsäureester zu Zinnatomen von mindestens 1, bevorzugt 1 bis 3, am meisten bevorzugt 2 einzustellen.

Die feuchtigkeitshärtende Silikonzusammensetzung enthält als zusätzlichen Bestandteil bevorzugt ein Polymer **PE** mit Polyether-Struktureinheiten. Die Zugabe von Polymer **PE** mit Polyether-Struktureinheiten ist insbesondere bevorzugt, wenn eine zinnorganische Verbindung als Kondensationskatalysator **K** eingesetzt wird. Der Ausdruck «Polyether-Struktureinheit» bedeutet, dass mindestens teilweise eine Polyetherstruktur, insbesondere eine Polyoxyalkylen-Struktur wie eine Polyoxyethylen- oder eine Polyoxypropylen-Struktur, in einer Haupt- oder Nebenpolymerkette des Polymers **PE** enthalten sein muss. Das Polymer **PE** kann daneben weitere Funktionalitäten oder Polymerkettenanteile ohne Polyetherstruktur aufweisen, wie beispielsweise Hydroxylgruppen, Aminogruppen, Silangruppen, Polydiorganylsiloxanketten oder Polyolefinketten.

Es ist jedoch bevorzugt, wenn das Polymer **PE** mindestens eine Hydroxylgruppe und/oder mindestens eine Aminogruppe aufweist, und dabei insbesondere keine Silangruppen, Polydiorganylsiloxanketten und/oder Polyolefinketten aufweist. Solche Polymere **PE** führen zu besonders guter Lagerstabilität in der Zusammensetzung, insbesondere in Zinn-katalysierten Formulierungen.

Das Vorliegen eines Polymers **PE** mit Polyether-Struktureinheiten in der Zusammensetzung hat den Vorteil, dass die Lagerstabilität erhöht und die Stabilität der ausgehärteten Zusammensetzung verbessert wird. Dieser Effekt ist besonders ausgeprägt in Ausführungsformen in denen eine zinnorganische Verbindung als Kondensationskatalysator **K** eingesetzt wird.

Falls ein Titanat als Kondensationskatalysator **K** eingesetzt wird enthält die Zusammensetzung jedoch bevorzugt kein Polymer **PE.**

Bevorzugt enthält die feuchtigkeitshärtende Silikonzusammensetzung zusätzlich ein Polymer **PE** mit Polyether-Struktureinheiten und bevorzugt mindestens einer Hydroxyl- und/oder Aminogruppe, insbesondere in einer Menge von zwischen 0.5 Gew.-% und 7.5 Gew.-%, bevorzugt zwischen 1 Gew.-% und 7 Gew.-%, bezogen auf die gesamte Zusammensetzung.

Alle Bestandteile der feuchtigkeitshärtenden, kondensationsvernetzenden Zusammensetzung können auf übliche Weise miteinander vermischt werden. Dazu werden die Einzelkomponenten in geeigneten Mischaggregaten, z.B. Zwangsmischern, Planetenmischern, Mischrohren, Knetern, Dissolvern oder Extrudern innig miteinander vermischt. Die Mischung kann kontinuierlich oder im Batchprozess erfolgen. Dabei kann das erfindungsgemässe, vernetzbare Polydiorganylsiloxan **P,** insbesondere eines der allgemeinen Formel (I) oder der Formel (la), in einer vorgelagerten, räumlich getrennten Reaktion hergestellt, gegebenenfalls zwischengelagert und dann in geeigneter Menge in das Mischaggregat eindosiert werden. Alternativ ist es auch möglich, und teilweise bevorzugt, das vernetzbare Polydiorganylsiloxan **P,** insbesondere eines der allgemeinen Formel (I) oder der Formel (la), direkt im Mischaggregat wie weiter oben beschrieben herzustellen und die weiteren Inhaltsstoffe nach Abschluss dieser Herstellung, ohne Aufarbeitung und/oder Zwischenlagerung des Polydiorganylsiloxans **P** zuzudosieren und einzumischen.

Die erfindungsgemässe Zusammensetzung kann eine zweikomponentige Zusammensetzung sein, bestehend aus einer **Komponente A** umfassend
a) das mindestens ein Polydiorganylsiloxan **P**
b) optional Füllstoffe
c) optional weitere Inhaltsstoffe
und einer **Komponente B** umfassend
a) den mindestens einen Kondensationskatalysator K
b) den mindestens einen Vernetzer **V**
c) optional Füllstoffe
d) optional weitere Inhaltsstoffe,
wobei die gemahlene Kreide **GK** in einer oder in beiden der Komponente **A** und/oder **B** enthalten sein kann.

Die Komponenten **A** und **B** dieser zweikomponentigen, feuchtigkeitshärtenden Zusammensetzung werden zur Lagerung getrennt voneinander aufbewahrt. Die Vermischung der Komponenten **A** und **B** kann auf übliche Weise erfolgen, z.B. durch Einrühren der Komponente **B** in die Komponente **A,** was manuell oder mithilfe einer geeigneten Rührvorrichtung, z.B. mit einem Statikmischer, Dynamikmischer, Speedmixer, Dissolver etc. erfolgen kann. Die beiden Komponenten können auch für die Applikation oder Einbringung aus den getrennten Aufbewahrungsbehältern, z.B. mit Zahnradpumpen, ausgepresst und vermischt werden. Die Vermischung kann dabei z.B. in Zufuhrleitungen oder Düsen für die Applikation oder Einbringung erfolgen oder unmittelbar auf dem Substrat oder in der Fuge erfolgen.

Die erfindungsgemässe Zusammensetzung kann eine einkomponentige Zusammensetzung sein. In einer bevorzugten Ausführungsform ist die erfindungsgemässe Zusammensetzung eine einkomponentige Zusammensetzung.

Die erfindungsgemässe Zusammensetzung kann als Klebstoff oder Dichtstoff in einem Verfahren zum Verkleben oder Verfugen von Substraten verwendet werden.

Somit ist ein Aspekt der Erfindung ein Verfahren zum Verkleben oder Verfugen von Substraten.

Das Verfahren zum Verkleben oder Verfugen von Substraten mit einer feuchtigkeitshärtenden Zusammensetzung gemäss vorliegender Erfindung und vorheriger Beschreibung umfasst:
a) gegebenenfalls das Vermischen allfällig in unterschiedlichen Gebinden gelagerter Komponenten der Zusammensetzung, um eine vollständige Mischung aller Inhaltsstoffe der Zusammensetzung zu erhalten,
b) die Applikation der vollständig gemischten Zusammensetzung auf ein Substrat und Inkontaktbringen der auf dem Substrat applizierten Mischung mit einem weiteren Substrat, um eine Klebverbindung zwischen den Substraten zu erhalten, oder das Einbringen der Mischung in eine Fuge zwischen zwei Substraten, um eine Verfugung zwischen den Substraten zu erhalten, und
c) das Härten der so applizierten Zusammensetzung. Bei Einkomponentensystemen durch das Einwirken von Feuchtigkeit, insbesondere Luftfeuchtigkeit.

Das allfällige Einmischen gemäss Schritt a) kann somit vor oder während der Applikation oder Einbringung gemäss Schritt b) durchgeführt wird. Die Vermischung sollte kurz vor der weiteren Verarbeitung erfolgen, da mit der Vermischung der Aushärteprozess beginnt. Naturgemäss entfällt Schritt a) bei Verwendung einer RTV-1 Formulierung.

Die Applikation auf ein Substrat oder das Einbringen in eine Fuge zwischen Substraten gemäss Schritt b) kann auf übliche Weise erfolgen, z.B. von Hand oder in einem automatisierten Prozess mithilfe von Robotern. Bei Verkleben wird das mit der Mischung versehene Substrat mit einem weiteren Substrat in Kontakt gebracht, gegebenenfalls unter Druck, um eine Klebverbindung zwischen den Substraten zu erhalten. Danach lässt man in Schritt c) die Mischung härten, gewöhnlich bei Raumtemperatur, um die Verklebung oder Verfugung der Substrate zu erreichen. Auf diese Weise werden die erfindungsgemässen verklebten oder verfugten Substrate mit der gehärteten Mischung als Kleb- oder Dichtmaterial erhalten.

Die zu verklebenden oder verfugenden Substrate können aus dem gleichen oder aus einem verschiedenen Material sein. Es können alle üblichen Materialien mit der erfindungsgemäßen zweikomponentigen Zusammensetzung verklebt oder verfugt werden. Bevorzugte Materialien zum Verkleben oder Verfugen sind Glas, Metalle, wie z.B. Aluminium, Kupfer, Stahl oder Edelstahl, Beton, Mörtel, Bausteine, wie z.B. Sandstein und Kalksandstein, Asphalt, Bitumen, Kunststoffe, wie z.B. Polyolefine, PVC, Tedlar, PET, Polyamid, Polycarbonat, Polystyrol oder Polyacrylat und Verbundwerkstoffe wie CFK.

Die erfindungsgemässe Zusammensetzung kann somit als Klebstoff oder Dichtstoff verwendet werden, z.B. in den Bereichen Bau, Sanitär, Automobil, Solartechnik, Windkrafttechnik, weisse Ware, Fassaden- und Fensterbau, Elektronik und Boots- und Schiffbau.

Dementsprechend ist ein weiterer Gegenstand der Erfindung die Verwendung einer erfindungsgemässen Zusammensetzung gemäss vorgängiger Beschreibung als Klebstoff, Dichtstoff, Beschichtung oder Vergussmasse, insbesondere in den Bereichen Bau, Sanitär, Automobilbau und -unterhalt, Solartechnik, Windkrafttechnik, weisse Ware, Fassaden- und Fensterbau, Elektronik und Boots- und Schiffbau.

Ein weiterer Gegenstand der Erfindung sind verklebte oder verfugte Substrate, erhältlich nach einem Verfahren wie eben beschrieben.

### Beispiele

Im Folgenden werden konkrete Ausführungsformen der Erfindung ausgeführt, die den Umfang der Erfindung aber nicht beschränken sollen. Alle Ausprüfungen wurden bei 23°C und 50% r.F. (relative Feuchtigkeit) durchgeführt.

Die in den nachstehenden Tabellen angegebenen Mengenanteile der Bestandteile für die Silikonzusammensetzungen wurden nacheinander eingewogen und an einem Speedmixer der Firma Hauschild bei 23°C und 50% r.F. für 20 s bei 2000 Umdrehungen pro Minute unter Anlegen eines Vakuums gemischt. Alle numerischen Werte der Inhaltsstoffe in allen Tabellen bezeichnen Gewichtsteile (z.B. in Gramm) des jeweiligen Inhaltsstoffs, der in die jeweilige Zusammensetzung zugegeben wurde. Die erhaltenen Zusammensetzungen wurden luftdicht verschlossen, bei 23°C für 24h gelagert und anschliessend geprüft.

Die Bestimmung der **Shore A Härte** erfolgte nach 7d Aushärtung an einem Shore A Prüfgerät der Firma Bareiss nach DIN ISO 7619-1. Zur Bestimmung der Shore A Härte wurden runde Probekörper mit einem Durchmesser von 42 mm und einer Dicke von 6 mm hergestellt.

Die Methode zur Bestimmung der **Bruchdehnung** sowie der **Zugfestigkeit** sowie die Herstellung der dazu benötigten Probekörper ist beschrieben in ISO 527. Gemessen wurde bei 23°C und 50% relativer Luftfeuchtigkeit an einem Prüfkörper Typ 1B (ISO 527-2) und mit einer Zuggeschwindigkeit von 200 mm/min. Die Zusammensetzungen wurden dazu vorab zu Fellen von 2 mm Dicke gerakelt und für 7d ausgehärtet.

Die Methode zur Bestimmung des **Weiterreisswiderstandes** (WRW) sowie die Herstellung der dazu benötigten Probekörper ist beschrieben in der DIN ISO 34-1. Gemessen wurde an Prüfkörpern vom Typ C.

Zur Bestimmung der **Hautbildezeit** wurde die zu prüfende Zusammensetzung auf einer Fläche von ca. 20 cm² mit einer Dicke von ca. 1 cm ausgestrichen. Es wurde darauf geachtet, dass die Oberfläche glatt war. Der Zeitpunkt des Ausstreichens markierte den Beginn der Messung. Mit einer PE-Pipette wurde die Oberfläche der erhärtenden Zusammensetzung berührt. Die Hautbildezeit war erreicht, wenn die PE-Pipette ohne sichtbare Anhaftungen abgenommen werden konnte.

Die Bestimmung **der Viskosität** erfolgte nach DIN EN ISO 3219 mittels Kegel-Platte-Viskosimeter MCR101 der Firma Anton-Paar, Österreich, mit Kegel-Typ CP 25-1 und einem Abstand von 0.049 mm bei 23°C. Die angegebenen Viskositätswerte beziehen sich auf eine Scherrate von 0.1 s⁻¹.

Abkürzungen von verwendeten Chemikalien können der folgenden Tabelle 1 entnommen werden. Alle Polymere basieren auf linearem Polydimethylsiloxan (PDMS) Alle Chemikalien sind, soweit nicht anders angegeben, im Chemikalienhandel (z.B. Sigma-Aldrich) kommerziell erhältlich.

### Tabelle 1:

**Tabelle 1: Verwendete Inhaltsstoffe.**

| **Bezeichnung** | **Beschreibung** |
|---|---|
| Polymer P1 | PDMS, 80'000 mPa s, endgruppenverschlossen mit Methyldimethoxysilan (Wacker^{®} Polymer AL 100 von Wacker Chemie AG Es liegen Vinyldimethoxysilyl-Endgruppen vor. |
| Polymer P2 | PDMS, 50'000 mPa s, endgruppenverschlossen mit einer Mischung aus Methyl- und Vinyltrimethoxysilan (Wacker^{®} Polymer NG 410 50T von Wacker Chemie AG). Es liegen Vinyldimethoxysilyl- bzw. Methyldimethoxysilyl-Endgruppen vor. |
| Polymer P3 | PDMS, 120'000 mPa s, endgruppenverschlossen mit Vinyltrimethoxysilan gemäss untenstehender Synthese. Es liegen Vinyldimethoxysilyl-Endgruppen vor. |
| Polymer P4 | PDMS, 80'000 mPa s, endgruppenverschlossen mit Vinyltrimethoxysilan gemäss untenstehender Synthese. Es liegen Vinyldimethoxysilyl-Endgruppen vor. |
| Polymer P5 | PDMS, 50'000 mPa s, endgruppenverschlossen mit Vinyltrimethoxysilan gemäss untenstehender Synthese. Es liegen Vinyldimethoxysilyl-Endgruppen vor. |
| Polymer P6 | PDMS, 20'000 mPa s, endgruppenverschlossen mit Vinyltrimethoxysilan gemäss untenstehender Synthese. Es liegen Vinyldimethoxysilyl-Endgruppen vor. |
| Weichmacher | PDMS, 100 mPa s, mit Trimethylsilyl-Endgruppen (Silikonöl Wacker^{®} AK 100 von Wacker Chemie AG). |
| Polyether PE1 | Polyether (Blockcopolymer mit Ethylenoxid- und Propylenoxid-Einheiten) und endständiger Hydroxylgruppe. |
| Polyether PE2 | Amin-gestarteter Polyether mit endständiger Hydroxylgruppe. |
| Vernetzer V1 | Oligomeres Siloxan mit Vinyl- und Methoxysilangruppen, Teilkondensat aus ungefähr 4 Einheiten Vinyltrimethoxysilan (Dynasylan^{®} 6490 von Evonik) |
| Vernetzer V2 | Vinyltrimethoxysilan |
| Vernetzer V3 | Methyltrimethoxysilan |
| Vernetzer V4 | Oligomeres Silan mit Mercaptopropyl- und Alkoxysilangruppen gebildet aus 2-Methylpropan-1 ,3-diol (CoatOSil^{®} T-Cure von Momentive) |
| Vernetzer V5 | 2-Aminoethyl-3-aminopropyltrimethoxysilan |
| Silica 1 | Pyrogene Silica, unbehandelt (CAB-O-SIL^{®} LM-150 von Cabot) |
| Silica 2 | Pyrogene Silica, hydrophobisiert (CAB-O-SIL^{®} Ultrabond 5780 von Cabot) |
| Russ 1 | Carbon black (Monarch^{®} 120 von Cabot) |
| Katalysator K1 | Dioctylzinndineodecanoat in Neodecansäure (TIB KAT^{®} 318 von TIB) |
| Katalysator K2 | Di-iso-Butoxyl Titanium Chelatkomplex mit Ethylacetoacetat (Tytan^{®} S6 von Borica) |
| Katalysator K3 | Dioctylzinndineodecanoat in Tetraethoxysilan (TIB KAT^{®} 417 von TIB) |
| Säure 1 | Partiell veresterte Phosphonsäure; 298 g/mol (Stabilizer POP^{®} von Wacker) |
| Säure 2 | Partiell veresterte Phosphorsäure; 322.5 g/mol (TIB STAB^{®} 115 von TIB) |
| Säure 3 | Partiell veresterte Phosphorsäure; 220 g/mol (Lakeland^{®} TPA 800 von Lakeland) |

Polymere P1 und P2 wurden direkt von Wacker bezogen; die Synthese von PDMS Polymeren mit Alkyloxyendgruppen ist zum Beispiel in US2008207938A1 beschrieben.

Die Herstellung der zur Synthese von Polymeren P3 bis P6 verwendeten Katalysatoren wird in WO 2016/207156, in WO 2013/087680, sowie in WO 2015/193208 beschrieben.

### Polymer P3

100 g lineares OH-PDMS mit einer Viskosität von 120'000 mPa s wurde mit 3 g Vinyltrimethoxysilan vermischt. Zu dieser Reaktionsmischung wurden 40 mg 1,1'-(α,ω-n-Propyl-poly(dimethylsiloxan))-bis(2,3-dicyclohexylguanidin)gegeben. Die Mischung wurde für 5h bei 40°C gerührt. Anschliessend war keine Gelierung bei Zugabe einiger Tropfen Tetra-n-propylorthotitanat zu einer kleinen Probe des Polymers mehr festzustellen, was die Vollständigkeit der Reaktion anzeigt. Das erhaltene Polymer ist lagerstabil und kann ohne weitere Aufarbeitung weiterverwendet werden.

### Polymer P4

Polymer P4 wurde analog zu Polymer 3 hergestellt, wobei das Polymer durch ein lineares OH-PDMS mit einer Viskosität von 80'000 mPa s ersetzt wurde.

### Polymer P5

Polymer P5 wurde analog zu Polymer 3 hergestellt, wobei das Polymer durch ein lineares OH-PDMS mit einer Viskosität von 50'000 mPa s ersetzt wurde.

### Polymer P6

Polymer P6 wurde analog zu Polymer 3 hergestellt, wobei das Polymer durch ein lineares OH-PDMS mit einer Viskosität von 20'000 mPa s ersetzt wurde.

### Einfluss der Partikelgrösse der gemahlenen Kreide GK

Es wurde eine Reihe von einkomponentigen Zusammensetzungen hergestellt (Versuche E1 bis E8), die sich einzig in der Art der verwendeten gemahlenen Kreide als Füllstoff unterschieden. Alle verwendeten gemahlenen Kreiden sind mit Stearat beschichtet und unterscheiden sich vorwiegend in der Partikelgrösse.

Die Grundformulierung der Versuche E1 bis E8 ist in Tabelle 2 dargestellt, die Details zu den verwendeten gemahlenen Kreiden in Tabelle 3. In Tabelle 4 sind alle Versuche E1 bis E8 mit den zugehörigen Messdaten dargestellt.

**Tabelle 2: Grundformulierung der Versuche E1 bis E8.**

| **Inhaltsstoff** | **Menge (Gewichtsteile)** |
|---|---|
| Polymer P1 | 32.68 |
| Weichmacher | 21.2 |
| Polyether PE1 | 2.33 |
| Vernetzer V1 | 1.87 |
| Vernetzer V5 | 1.4 |
| Silica 1 | 2.8 |
| Gemahlene Kreide GK (s. Tabelle 3) | 37.35 |
| Katalysator K1 | 0.09 |
| Säure 1 | 0.28 |

**Tabelle 3: Details zu den verwendeten Kreiden GK.**

| **Gemahlene Kreide GK** | **Beschreibung** |
|---|---|
| GK1 | Omya^{®} BLH (Omya); gemahlene Kreide mit Partikelgrösse d50 = 5 µm |
| GK2 | Calciplast^{®} 4M (Alpha Calcit); gemahlene Kreide mit Partikelgrösse d50 = 4 µm |
| GK3 | Omyacarb^{®} 2T-AV (Omya); gemahlene Kreide mit Partikelgrösse d50 = 2 µm |
| GK4 | Calatem^{®} C16T (Provençale); gemahlene Kreide mit Partikelgrösse d50 = 1.6 µm |
| GK5 | Calatem^{®} CT (Provençale); gemahlene Kreide mit Partikelgrösse d50 = 0.9 µm |
| GK6 | Calatem^{®} 06NGT (Provençale); gemahlene Kreide mit Partikelgrösse d50 = 0.7 µm |
| GK7 | Omyabond^{®} 120 (Omya); gemahlene Kreide mit Partikelgrösse d50 = 0.6 µm |
| GK8 | Calofort^{®} SV14 (Specialty Minerals); gefällte Kreide mit Partikelgrösse d50 = 0.07 µm |

**Tabelle 4: Messergebnisse der Versuche E1 bis E8. * nicht erfindungsgemässe Referenzversuche. «n/m» bedeutet nicht gemessen. «n/h» bedeutet, dass die Silikonmasse nach 7 Tagen Aushärtezeit bei Standardbedingungen (Normklima) nicht ausgehärtet war.**

| **Versuch** | **E1*** | **E2*** | **E3*** | **E4** | **E5** | **E6** | **E7*** | **E8*** |
|---|---|---|---|---|---|---|---|---|
| Kreide GK | GK1 | GK2 | GK3 | GK4 | GK5 | GK6 | GK7 | GK8 |
| Partikelgrösse [µm] | 5 | 4 | 2 | 1.6 | 0.9 | 0.7 | 0.6 | 0.07 |

| Messwerte nach 7 Tagen Aushärtung bei Normklima (23°C, 50% r.h.) | | | | | | | | |
|---|---|---|---|---|---|---|---|---|
| Zugfestigkeit [MPa] | 0.79 | 0.86 | 0.84 | 1.33 | 1.49 | 1.84 | 2.06 | 1.71 |
| Bruchdehnung [%] | 585 | 508 | 674 | 826 | 737 | 851 | 709 | 640 |
| Shore A Härte | 18 | 16 | 14 | 17 | 17 | 20 | 24 | 21 |
| WRW [N/mm] | 2.69 | 2.84 | 2.4 | 3.37 | 6.23 | 11.7 | 13.1 | 12.6 |

| Messwerte nach 7 Tagen Aushärtung bei Normklima (nicht vulkanisiertes Material vorab während 7 Tagen bei 70°C in geschlossener Kartusche gealtert) | | | | | | | | |
|---|---|---|---|---|---|---|---|---|
| Zugfestigkeit [MPa] | 0.78 | 1.0 | n/m | 1.1 | 1.06 | 1.43 | n/h | n/h |
| Bruchdehnung [%] | 618 | 627 | n/m | 700 | 599 | 762 | n/h | n/h |
| Shore A Härte | 16 | 13 | n/m | 15 | 10 | 16 | n/h | n/h |
| WRW [N/mm] | 2.8 | 2.7 | n/m | 4.04 | 7.08 | 9.63 | n/h | n/h |

Die Ergebnisse der Tabelle 4 zeigen, dass erfindungsgemässe Kreiden GK zu besonders guten mechanischen Eigenschaften der Zusammensetzung führen (insbesondere hohe Zugfestigkeit bei gleichzeitig hoher Bruchdehnung). Noch überraschender ist der aussergewöhnlich hohe Weiterreisswiderstand, den erfindungsgemässe Zusammensetzungen aufweisen. Diese Eigenschaften bleiben auch nach künstlicher Alterung der Zusammensetzung weitgehend erhalten. Dagegen zeigen nicht erfindungsgemässe Kreiden mit zu geringer Partikelgrösse (E7) oder Fällungskreiden (E8) zwar im frischen Zustand eine gute Weiterreissfestigkeit, aber sie weisen eine absolut ungenügende Lagerstabilität auf und härten nach künstlicher Alterung gar nicht mehr aus. Künstliche Alterung wurde in allen Beispielen durchgeführt, indem eine hergestellte Probe im verschlossenen Gebinde während 7 Tagen bei 70°C gelagert wurde. Mit einer solchen Hitzelagerung lässt sich die Lagerstabilität einer Zusammensetzung durch eine simulierte, beschleunigte Alterung bestimmen.

### Einfluss der Menge an gemahlener Kreide GK

Es wurde eine Reihe von Versuchen E9 bis E16 mit unterschiedlichen Mengenanteilen an gemahlener Kreide GK durchgeführt. Die Details dieser Versuche und die zugehörigen Messergebnisse sind in Tabelle 5 gezeigt. Die Zahlenangaben bei den Formulierungen bezeichnen Gewichtsteile des jeweiligen Inhaltsstoffs. Die Inhaltsstoffe sind in Tabellen 1 und 3 spezifiziert.

**Tabelle 5: Formulierungsdetails und Messergebnisse der Versuche E9 bis E16.**

| **Versuch** | **E9** | **E10** | **E11** | **E12** | **E13** | **E14** | **E15** | **E16** |
|---|---|---|---|---|---|---|---|---|
| Polymer P1 | 31.41 | 32.32 | 30.23 | 28.18 | 26.13 | 24.08 | 22.03 | 19.76 |
| Weichmacher | 22.32 | 20.96 | 19.6 | 18.28 | 16.96 | 15.64 | 14.32 | 12.82 |
| Polyether PE2 | 2.46 | 2.31 | 2.16 | 2.01 | 1.86 | 1.71 | 1.56 | 1.41 |
| Vernetzer V1 | 1.97 | 1.85 | 1.73 | 1.61 | 1.49 | 1.37 | 1.25 | 1.13 |
| Vernetzer V5 | 1.47 | 1.39 | 1.31 | 1.21 | 1.11 | 1.01 | 0.91 | 0.85 |
| Kreide GK5 | 34.02 | 38.04 | 42.06 | 45.97 | 49.88 | 53.79 | 57.7 | 62.11 |
| Silica 1 | 2.95 | 2.77 | 2.59 | 2.42 | 2.25 | 2.08 | 1.91 | 1.69 |
| Katalysator K1 | 0.1 | 0.09 | 0.08 | 0.08 | 0.08 | 0.08 | 0.08 | 0.06 |
| Säure 1 | 0.29 | 0.28 | 0.27 | 0.24 | 0.21 | 0.18 | 0.15 | 0.17 |

| Messwerte frisch (gemessen bei Normklima) | | | | | | | | |
|---|---|---|---|---|---|---|---|---|
| Hautbildezeit [min] | 60 | 60 | 60 | 60 | 60 | 60 | 60 | 20 |
| Viskosität [Pa s] | 336 | 398 | 454 | 570 | 689 | 947 | 1226 | 1722 |

| Messwerte nach 7 Tagen Aushärtung bei Normklima (23°C, 50% r.h.) | | | | | | | | |
|---|---|---|---|---|---|---|---|---|
| Zugfestigkeit [MPa] | 1.7 | 1.7 | 1.8 | 1.6 | 1.51 | 1.52 | 1.38 | 1.34 |
| Bruchdehnung [%] | 800 | 829 | 820 | 746 | 719 | 629 | 460 | 313 |
| Shore A Härte | 17 | 19 | 20 | 24 | 27 | 30 | 35 | 39 |
| WRW [N/mm] | 2.8 | 4.2 | 5.9 | 9.3 | 11.1 | 10 | 9 | 5.7 |

| Messwerte nach 28 Tagen Aushärtung bei Normklima (23°C, 50% r.h.) | | | | | | | | |
|---|---|---|---|---|---|---|---|---|
| Zugfestigkeit [MPa] | 1.57 | 1.68 | 1.62 | 1.73 | 1.62 | 1.64 | 1.55 | 1.56 |
| Bruchdehnung [%] | 645 | 685 | 626 | 663 | 615 | 504 | 386 | 296 |
| Shore A Härte | 20 | 21 | 24 | 26 | 28 | 32 | 35 | 43 |
| WRW [N/mm] | 2.9 | 3.4 | 4.4 | 5.4 | 8.3 | 7.7 | 6.6 | 5.4 |

### Einfluss der Kettenlänge von Polydiorganylsiloxan P

Es wurde eine Reihe von Versuchen E17 bis E24 mit verschiedenen Polymeren **P** unterschiedlicher Kettenlänge durchgeführt. Die Details dieser Versuche und die zugehörigen Messergebnisse sind in Tabelle 6 gezeigt. Die Zahlenangaben bei den Formulierungen bezeichnen Gewichtsteile des jeweiligen Inhaltsstoffs. Die Inhaltsstoffe sind in Tabellen 1 und 3 spezifiziert.

**Tabelle 6: Formulierungsdetails und Messergebnisse der Versuche E17 bis E24. «n/m» bedeutet nicht gemessen. * nicht erfindungsgemässe Referenzversuche.**

| **Versuch** | **E17** | **E18** | **E19** | **E20*** | **E21** | **E22** | **E23** | **E24** |
|---|---|---|---|---|---|---|---|---|
| Polymer P2 | 32.68 | 32.68 | 32.68 | 32.68 | - | - | - | - |
| Polymer P3 | - | - | - | - | 30.34 | - | - | - |
| Polymer P4 | - | - | - | - | - | 30.34 | - | - |
| Polymer P5 | - | - | - | - | - | - | 30.34 | |
| Polymer P6 | - | - | - | - | - | - | - | 30.34 |
| Weichmacher | 21.2 | 21.2 | 21.2 | 21.2 | 17.77 | 17.77 | 17.77 | 17.77 |
| Polyether PE1 | 2.33 | 2.33 | 2.33 | 2.33 | - | - | - | - |
| Polyether PE2 | - | - | - | - | 2.14 | 2.14 | 2.14 | 2.14 |
| Vernetzer V1 | 1.87 | 1.87 | 1.87 | 1.87 | 1.4 | 1.4 | 1.4 | 1.4 |
| Vernetzer V5 | 1.4 | 1.4 | 1.4 | 1.4 | 1.4 | 1.4 | 1.4 | 1.4 |
| Russ 1 | - | - | - | - | 1.95 | 1.95 | 1.95 | 1.95 |
| Kreide GK4 | 37.35 | - | - | - | - | - | - | - |
| Kreide GK5 | - | 37.35 | - | - | 42.06 | 42.06 | 42.06 | 42.06 |
| Kreide GK6 | - | - | 37.35 | - | - | - | - | - |
| Kreide GK8 | - | - | - | 37.35 | - | - | - | - |
| Silica 1 | 2.8 | 2.8 | 2.8 | 2.8 | 2.6 | 2.6 | 2.6 | 2.6 |
| Katalysator K1 | 0.09 | 0.09 | 0.09 | 0.09 | 0.09 | 0.09 | 0.09 | 0.09 |
| Säure 1 | 0.28 | 0.28 | 0.28 | 0.28 | 0.24 | 0.24 | 0.24 | 0.24 |

| Messwerte frisch (gemessen bei Normklima) | | | | | | | | |
|---|---|---|---|---|---|---|---|---|
| Hautbildezeit [min] | 120 | 150 | 150 | 120 | 52 | 45 | 37 | 42 |
| Viskosität [Pa s] | 602 | 840 | 1083 | 2271 | 1266 | 783 | 843 | 750 |

| Messwerte nach 7 Tagen Aushärtung bei Normklima (23°C, 50% r.h.) | | | | | | | | |
|---|---|---|---|---|---|---|---|---|
| Zugfestigkeit [MPa] | 1.45 | 1.73 | 1.77 | 1.87 | 1.62 | 1.59 | 1.63 | 1.63 |
| Bruchdehnung [%] | 503 | 632 | 511 | 418 | 801 | 652 | 620 | 476 |
| Shore A Härte | 24 | n/m | 26 | 35 | 21 | 21 | 25 | 28 |
| WRW [N/mm] | 3.4 | 4.71 | 7.1 | n/m | 10.6 | 8.77 | 7.1 | 4.1 |

| Messwerte nach 7 Tagen Aushärtung bei Normklima (nicht vulkanisiertes Material vorab während 7 Tagen bei 70°C in geschlossener Kartusche gealtert) | | | | | | | | |
|---|---|---|---|---|---|---|---|---|
| Zugfestigkeit [MPa] | n/m | n/m | n/m | n/m | 1.28 | 1.52 | n/m | n/m |
| Bruchdehnung [%] | n/m | n/m | n/m | n/m | 725 | 533 | n/m | n/m |
| Shore A Härte | n/m | n/m | n/m | n/m | 15 | 21 | n/m | n/m |
| WRW [N/mm] | n/m | n/m | n/m | n/m | 8.81 | 8.0 | n/m | n/m |

### Einfluss von Polymer PE mit Polvether-Struktureinheiten

Es wurde eine Reihe von Versuchen E25 bis E30 mit verschiedenen Polymeren **PE** mit Polyether-Struktureinheiten durchgeführt. Die Details dieser Versuche und die zugehörigen Messergebnisse sind in Tabelle 8 gezeigt. Die Zahlenangaben bei den Formulierungen bezeichnen Gewichtsteile des jeweiligen Inhaltsstoffs. Die Inhaltsstoffe sind in Tabellen 1 und 7 spezifiziert.

**Tabelle 7: Details zu den verwendeten Polymeren mit Polyether-Struktureinheiten.**

| **Polymer PE** | **Beschreibung** |
|---|---|
| PE3 | Polyethersiloxan-Polymer mit vollständig acetylierten Hydroxylgruppen (Silsurf^{®} J1015-O-Ac von Siltech) |
| PE4 | Hydroxyl-funktionelles langkettiges Polyetherdiol (Acclaim^{®} Polyol 12200 N von Covestro) |
| PE5 | Hydroxyl-funktionelles Polyethertriol (Voranol^{®} CP 4755 von Dow) |
| PE6 | Hydroxyl-funktionelles kurzkettiges Polyetherdiol (Acclaim^{®} Polyol 4200 von Covestro) |

**Tabelle 8: Formulierungsdetails und Messergebnisse der Versuche E25 bis E30. «n/m» bedeutet nicht gemessen, «nh» nicht ausgehärtet.**

| **Versuch** | **E25** | **E26** | **E27** | **E28** | **E29** | **E30** |
|---|---|---|---|---|---|---|
| Polymer P2 | 30.71 | 30.71 | 30.71 | 30.71 | 30.71 | 30.71 |
| Weichmacher | 17.99 | 17.99 | 17.99 | 17.99 | 17.99 | 17.99 |
| Polyether PE2 | 2.14 | 1.08 | - | - | - | - |
| Polyether PE3 | - | - | 1.08 | - | - | - |
| Polyether PE4 | - | - | - | 1.08 | - | - |
| Polyether PE5 | - | - | - | - | 1.08 | - |
| Polyether PE6 | - | - | - | - | - | 1.08 |
| Vernetzer V1 | 1.13 | 1.13 | 1.13 | 1.13 | 1.13 | 1.13 |
| Vernetzer V5 | 1.31 | 1.31 | 1.31 | 1.31 | 1.31 | 1.31 |
| Vernetzer V2 | 0.38 | 0.38 | 0.38 | 0.38 | 0.38 | 0.38 |
| Kreide GK5 | 44.46 | 44.46 | 44.46 | 44.46 | 44.46 | 44.46 |
| Silica 1 | 2.64 | 2.64 | 2.64 | 2.64 | 2.64 | 2.64 |
| Katalysator K1 | 0.07 | 0.07 | 0.07 | 0.07 | 0.07 | 0.07 |
| Säure 1 | 0.24 | 0.24 | 0.24 | 0.24 | 0.24 | 0.24 |

| Messwerte frisch (gemessen bei Normklima) | | | | | | |
|---|---|---|---|---|---|---|
| Hautbildezeit [min] | 58 | 39 | 43 | 20 | 60 | 60 |
| Viskosität [Pa s] | 684 | 904 | 817 | 823 | 769 | 757 |

| Messwerte nach 7 Tagen Aushärtung bei Normklima (23°C, 50% r.h.) | | | | | | |
|---|---|---|---|---|---|---|
| Zugfestigkeit [MPa] | 1.48 | 1.67 | 1.73 | 2.0 | 1.63 | 1.8 |
| Bruchdehnung [%] | 637 | 719 | 682 | 680 | 575 | 644 |
| Shore A Härte | 22 | n/m | n/m | 25 | 23 | 24 |
| WRW [N/mm] | 6.01 | 6.5 | 5.8 | 7.0 | 6.6 | 6.5 |

| Messwerte nach 7 Tagen Aushärtung bei Normklima (nicht vulkanisiertes Material vorab während 7 Tagen bei 70°C in geschlossener Kartusche gealtert) | | | | | | |
|---|---|---|---|---|---|---|
| Zugfestigkeit [MPa] | 1.45 | 1.2 | n/h | 1.32 | 1.5 | 1.55 |
| Bruchdehnung [%] | 609 | 444 | n/h | 481 | 449 | 445 |
| Shore A Härte | n/m | 14 | n/h | 15 | 18 | 20 |
| WRW [N/mm] | 8.34 | 7.7 | n/h | 8.2 | 8.9 | 9.21 |

Aus Tabelle 8 wird ersichtlich, dass Polymere mit Polyether-Struktureinheiten als Additive zur zusätzlichen Verbesserung der Lagerstabilität signifikant beitragen können, insbesondere wenn sie Hydroxyl- oder Amin-funktionell sind.

### Einfluss von Katalysator K und Säure

Es wurde eine Reihe von Versuchen E31 bis E38 mit verschiedenen Katalysatoren **K,** bzw. unterschiedlicher Menge durchgeführt. Die Details dieser Versuche und die zugehörigen Messergebnisse sind in Tabellen 9 und 10 gezeigt. Die Zahlenangaben bei den Formulierungen bezeichnen Gewichtsteile des jeweiligen Inhaltsstoffs. Die Inhaltsstoffe sind in Tabellen 1 und 7 spezifiziert.

Versuche E31 bis E38 zeigen den Einfluss verschiedener Verhältnisse von Säure zu Katalysator **K** auf die Eigenschaften der Zusammensetzung. Dabei wurde die Säure jeweils zusammen mit dem Katalysator am Ende der Formulierung zugegeben.

Versuche E39 bis E46zeigen den Einfluss der Säure auf die Lagerstabilität in zinnkatalysierten Formulierungen. In einigen Versuchen wurde die Säure mit dem Katalysator vorreagiert und als Mischung zugegeben. Im Vergleich dazu wurde in Versuch E46 die Säure zusammen mit den Vernetzern zugegeben. Die Vorreaktion der Säure mit dem Zinnkatalysator kann über NMR-Spektroskopie verfolgt werden: Im ³¹P NMR ändert sich die chemische Verschiebung, wenn ein Phosphatester am Zinn komplexiert wird (von 0.25 ppm für einen freien Monoester, bzw. 1.45 ppm für einen freien Diester zu -3.2 ppm für einen am Zinn komplexierten Phosphatliganden). Dasselbe ist im ¹¹⁹SN-NMR Spektrum zu beobachten: Wenn alle Zinnatome des Katalysators von Phosphatliganden komplexiert sind, ändert sich die chemische Verschiebung von -160 ppm (Katalysator K1, bzw. K3 wie eingesetzt) zu -262 ppm (Ligandenaustausch mit Komplexierung von Phosphorsäureestern).

**Tabelle 9: Formulierungsdetails und Messergebnisse der Versuche E31 bis E38. «n/m» bedeutet nicht gemessen.**

| **Versuch** | **E31** | **E32** | **E33** | **E34** | **E35** | **E36** | **E37** | **E38** |
|---|---|---|---|---|---|---|---|---|
| Polymer P1 | 32.65 | 32.72 | 33.09 | 33.16 | 32.6 | 32.3 | 32.4 | 32.75 |
| Weichmacher | 13.95 | 13.98 | 14.14 | 14.17 | 13.9 | 13-8 | 13.9 | 13.99 |
| Polyether PE2 | - | - | - | - | 0.47 | 1.41 | 0.94 | - |
| Polyether PE6 | - | - | - | - | - | - | - | 0.48 |
| Vernetzer V3 | 1.14 | 1.14 | 1.15 | - | 1.14 | 1.13 | 1.13 | 1.15 |
| Vernetzer V4 | - | - | - | 0.58 | - | - | - | - |
| Vernetzer V5 | 0.95 | 0.95 | 0.96 | 0.96 | 0.95 | 0.94 | 0.94 | 0.96 |
| Kreide GK5 | 40.72 | 40.8 | 41.27 | 41.35 | 40.61 | 40.23 | 40.4 | 40.84 |
| Silica 2 | 7.36 | 7.37 | 7.46 | 7.47 | 7.34 | 7.27 | 7.3 | 7.38 |
| Katalysator K2 | 2.85 | 1.9 | 1.92 | 1.93 | 1.89 | 1.88 | 1.88 | 1.9 |
| Säure 1 | 0.38 | 1.14 | - | 0.39 | 1.14 | 1.13 | 1.13 | - |
| Säure 2 | - | - | - | - | - | - | - | 0.57 |

| Messwerte frisch (gemessen bei Normklima) | | | | | | | | |
|---|---|---|---|---|---|---|---|---|
| Hautbildezeit [min] | 16 | 61 | 25 | 48 | 100 | 120 | 170 | 80 |
| Viskosität [Pa s] | 980 | 1123 | 1045 | 1466 | 1290 | 1592 | 1403 | 1327 |

| Messwerte nach 7 Tagen Aushärtung bei Normklima (23°C, 50% r.h.) | | | | | | | | |
|---|---|---|---|---|---|---|---|---|
| Zugfestigkeit [MPa] | 2.31 | 2.54 | 2.37 | 2.46 | 2.5 | 2.3 | 2.4 | 2.45 |
| Bruchdehnung [%] | 358 | 541 | 439 | 565 | 680 | 765 | 737 | 656 |
| Shore A Härte | n/m | n/m | n/m | n/m | 34 | 33 | 32 | n/m |
| WRW [N/mm] | 18.45 | 17.6 | 17.1 | 17.9 | 18.3 | 15.6 | 15.3 | 16.4 |

**Tabelle 10: Formulierungsdetails und Messergebnisse der Versuche E39 bis E46. «n/m» bedeutet nicht gemessen. ¹ Katalysator K und Säure wurden vorreagiert und als Mischung zugegeben. ² Säure wurde zusammen mit Vernetzern V zugegeben.**

| **Versuch** | **E39 ¹** | **E40** | **E41 ¹** | **E42** | **E43 ¹** | **E44 ¹** | **E45** | **E46 ²** |
|---|---|---|---|---|---|---|---|---|
| Polymer P1 | 29.9 | 29.9 | 29.9 | 29.9 | 29.9 | 33 | 33 | 33 |
| Weichmacher | 19.4 | 19.4 | 19.4 | 19.4 | 19.4 | 15 | 15 | 15 |
| Polyether PE1 | 2.1 | 2.1 | 2.1 | 2.1 | 2.1 | - | - | - |
| Polyether PE6 | - | - | - | - | - | 2 | 2 | 2 |
| Vernetzer V1 | 1.9 | 1.9 | 1.9 | 1.9 | 1.9 | 3 | 3 | 3 |
| Vernetzer V5 | 1.3 | 1.3 | 1.3 | 1.3 | 1.3 | 1 | 1 | 1 |
| Kreide GK5 | 41 | 41 | 41 | 41 | 41 | 45 | 45 | 45 |
| Russ 1 | 1.8 | 1.8 | 1.8 | 1.8 | 1.8 | - | - | - |
| Silica 1 | 2.6 | 2.6 | 2.6 | 2.6 | 2.6 | 3 | 3 | 3 |
| Katalysator K1 | 0.09 | 0.09 | - | - | 0.09 | 0.1 | 0.06 | 0.1 |
| Katalysator K3 | - | - | 0.09 | 0.09 | - | - | - | - |
| Säure 1 | 0.26 | - | 0.26 | - | - | - | - | - |
| Säure 2 | - | - | - | - | - | 0.3 | - | 0.3 |
| Säure 3 | - | - | - | - | 0.26 | - | - | - |

| Messwerte frisch (gemessen bei Normklima) | | | | | | | | |
|---|---|---|---|---|---|---|---|---|
| Hautbildezeit [min] | 57 | 82 | 47 | 22 | 100 | 70 | 40 | 40 |

| Messwerte nach 7 Tagen Aushärtung bei Normklima (23°C, 50% r.h.) | | | | | | | | |
|---|---|---|---|---|---|---|---|---|
| Zugfestigkeit [MPa] | 0.79 | 0.73 | 0.83 | 0.82 | 0.87 | 0.9 | 0.98 | 1.0 |
| Bruchdehnung [%] | 585 | 566 | 671 | 666 | 631 | 458 | 455 | 490 |
| Shore A Härte | 17 | 16 | 17 | 16 | 19 | 18 | 17 | 18 |

| Messwerte nach Alterung in geschlossenem Gebinde während 7 Tagen bei 70°C. (gemessen bei Normklima) | | | | | | | | |
|---|---|---|---|---|---|---|---|---|
| Hautbildezeit [min] | 72 | >300 | 44 | >300 | 129 | 90 | >360 | 240 |

| Messwerte nach 7 Tagen Aushärtung bei Normklima (nicht vulkanisiertes Material vorab während 7 Tagen bei 70°C in geschlossener Kartusche gealtert) | | | | | | | | |
|---|---|---|---|---|---|---|---|---|
| Zugfestigkeit [MPa] | 0.78 | n/m | 0.75 | n/m | 0.83 | 0.96 | n/m | 0.93 |
| Bruchdehnung [%] | 618 | n/m | 578 | n/m | 616 | 407 | n/m | 407 |
| Shore A Härte | 16 | n/m | 16 | n/m | 17 | n/m | n/m | n/m |

## Patentansprüche

1. Feuchtigkeitshärtende Silikonzusammensetzung umfassend
a) mindestens ein vernetzbares Polydiorganylsiloxan **P** mit Alkoxysilan-Endgruppen;
b) mindestens einen Kondensationskatalysator **K;**
c) mindestens einen Vernetzer **V** mit Alkoxysilangruppen;
d) mindestens eine gemahlene Kreide **GK,** welche mindestens den Hauptanteil aller enthaltenen Füllstoffe ausmacht;
e) optional weitere Inhaltsstoffe, insbesondere ein unreaktives Polydiorganylsiloxan als Weichmacher,
**dadurch gekennzeichnet, dass** die gemahlene Kreide **GK** eine Partikelgrösse d50, bestimmt nach der Norm ISO 13320:2009, von mehr als 0.6 µm und weniger als 2 µm aufweist.

2. Feuchtigkeitshärtende Silikonzusammensetzung gemäss Anspruch 1, **dadurch gekennzeichnet, dass** das vernetzbare Polydiorganylsiloxan **P** in einer Kondensationsreaktion aus OH-terminiertem Polydiorganylsiloxan und einem Tri- oder Tetraalkoxysilan hergestellt wird, bevorzugt einem Methyltrialkoxysilan oder einem Vinyltrialkoxysilan.

3. Feuchtigkeitshärtende Silikonzusammensetzung gemäss Anspruch 2, **dadurch gekennzeichnet, dass** die Umsetzung des OH-terminierten Polydiorganylsiloxans mit dem Tri- oder Tetraalkoxysilan in Gegenwart eines Amidin- oder Guanidinkatalysators durchgeführt wird.

4. Feuchtigkeitshärtende Silikonzusammensetzung gemäss einem der vorhergehenden Ansprüche, **dadurch gekennzeichnet, dass** Vernetzer **V** ein Aminogruppen-haltiges Alkoxysilan oder-siloxan ausgewählt ist aus 3-Aminopropyltrimethoxysilan, 3-Aminopropyltriethoxysilan, N-(2-Aminoethyl)-3-aminopropyl-trimethoxysilan, N-(2-Aminoethyl)-3-aminopropyl-methyldimethoxysilan, sowie oligomeren Siloxanen erhalten aus der partiellen Kondensation mindestens einer dieser Silane und gegebenenfalls weiteren Silanen.

5. Feuchtigkeitshärtende Silikonzusammensetzung gemäss einem der vorhergehenden Ansprüche, **dadurch gekennzeichnet, dass** der Kondensationskatalysator **K** eine Verbindung eines Elementes der Gruppen 1, 2, 4, 12, 14 oder 15 des Periodensystems der Elemente ist, bevorzugt eine Verbindung der Gruppen 4 oder 14, besonders bevorzugt von Titan oder Zinn, ganz besonders bevorzugt eine zinnorganische Verbindung, ist.

6. Feuchtigkeitshärtende Silikonzusammensetzung gemäss einem der vorhergehenden Ansprüche, **dadurch gekennzeichnet, dass** die Silikonzusammensetzung zwischen 30 Gew.-% und 70 Gew.-%, bevorzugt zwischen 40 Gew.-% und 60 Gew.-%, insbesondere zwischen 45 Gew.-% und 55 Gew.-% gemahlene Kreide **GK,** bezogen auf die gesamte Zusammensetzung, enthält.

7. Feuchtigkeitshärtende Silikonzusammensetzung gemäss einem der vorhergehenden Ansprüche, **dadurch gekennzeichnet, dass** die Zusammensetzung zusätzlich zwischen 0.1 Gew.-% und 1.5 Gew.-%, bevorzugt zwischen 0.2 Gew.-% und 1.0 Gew.-%, bezogen auf die gesamte Zusammensetzung, einer Säure oder deren konjugierte Base enthält, vorzugsweise einer teilweise veresterten Phosphorsäure und/oder einer teilweise veresterten Phosphonsäure, wobei diese bevorzugt komplexiert mit dem Kondensationskatalysator **K** vorliegt

8. Feuchtigkeitshärtende Silikonzusammensetzung gemäss einem der vorhergehenden Ansprüche, **dadurch gekennzeichnet, dass** die Zusammensetzung zusätzlich ein Polymer **PE** mit Polyether-Struktureinheiten und bevorzugt mindestens einer Hydroxyl- und/oder Aminogruppe enthält, insbesondere in einer Menge von zwischen 0.5 Gew.-% und 7.5 Gew.-%, bevorzugt zwischen 1 Gew.-% und 7 Gew.-%, bezogen auf die gesamte Zusammensetzung.

9. Feuchtigkeitshärtende Silikonzusammensetzung gemäss einem der vorhergehenden Ansprüche, **dadurch gekennzeichnet, dass** Zusammensetzung zusätzlich eine, bevorzugt hydrophobisierte, pyrogene Kieselsäure enthält, insbesondere in einer Menge von zwischen 1 Gew.-% und 10 Gew.-%, bevorzugt zwischen 2 Gew.-% und 5 Gew.-%, bezogen auf die gesamte Zusammensetzung.

10. Feuchtigkeitshärtende Silikonzusammensetzung gemäss einem der vorhergehenden Ansprüche, **dadurch gekennzeichnet, dass** der Vernetzer **V** ein oligomeres Siloxan umfasst, insbesondere ein oligomeres Siloxan mit Alkoxysilangruppen und Vinylgruppen.

11. Feuchtigkeitshärtende Silikonzusammensetzung gemäss einem der vorhergehenden Ansprüche, **dadurch gekennzeichnet, dass** als weitere Inhaltsstoffe OH-terminierte Polydimethylsiloxane, Weichmacher, Haftvermittler, Härtungsbeschleuniger, OH-Fänger, Trocknungsmittel, Benetzungshilfsmittel, Rheologiemodifikatoren, Thixotropierungsmittel, Verarbeitungshilfsmittel, Biozide, UV-Stabilisatoren, Hitzestabilisatoren, Flammschutzmittel, Farbpigmente, Geruchsstoffe, Antistatika, und/oder Emulgatoren enthalten sind.

12. Feuchtigkeitshärtende Silikonzusammensetzung gemäss einem der Ansprüche 1 bis 11, **dadurch gekennzeichnet, dass** die Zusammensetzung eine einkomponentige Silikonzusammensetzung ist.

13. Verwendung einer Zusammensetzung gemäss einem der vohergehenden Ansprüche als Klebstoff, Dichtstoff, Beschichtung oer Vergussmasse, insbesondere in den Bereichen Bau, Sanitär, Automobilbau und -unterhalt, Solartechnik, Windkrafttechnik, weisse Ware, Fassaden- und Fensterbau, Elektronik und Boots- und Schiffbau.

14. Verfahren zum Verkleben oder Verfugen von Substraten mit einer feuchtigkeitshärtenden Zusammensetzung gemäss einem der Ansprüche 1-12, umfassend
a) gegebenfalls das Vermischen allfällig in unterschiedlichen Gebinden gelagerter Komponenten der Zusammensetzung, um eine vollständige Mischung aller Inhaltsstoffe der Zusammensetzung zu erhalten,
b) die Applikation der vollständig gemsichten Zusammensetzug auf ein Substrat und Inkontaktbringen der auf dem Substrat applizierten Mischung mit einem weiteren Substrat, um eine Klebverbindung zwischen den Substraten zu erhalten, oder das Einbringen der Mischung in eine Fuge zwischen zwei Substraten, um eine Verfugung zwischen den Substraten zu erhalten, und
c) das Härten der so applizierten Zusammensetzung durch Einwirken von Feuchtigkeit, insbesondere Luftfeuchtigkeit.

15. Verklebte oder verfugte Substrate, erhältlich nach einem Verfahren nach Anspruch 14.
